# EUROPEAN PATENT APPLICATION

(11) **EP 4 187 740 A1**
(43) Date of publication of application: **31.05.2023**
(21) Application number: 22208213.3
(22) Date of filing: 18.11.2022
(51) Int. Cl.: H02J 3/14, B60L 53/63, B60L 53/68, B60L 55/00, H02J 3/32, B60L 53/64, H02J 7/00

(54) **COMPUTER AND POWER BALANCING METHOD**

(30) Priority: 29.11.2021 JP 2021193207
(71) Applicant: DENSO CORPORATION, Kariya-city, Aichi 448-8661 (JP)
(72) Inventor: KANDA, Chiaki, Kariya-city, 448-8661 (JP)
(74) Representative: TBK

(57) **Abstract**

A computer (600) manages a plurality of resources (500) operable as a balancing power for an external power supply (PG). Each of the resources (500) includes a power storage device (B2) chargeable with electric power from the external power supply (PG). The computer (600) executes resource selection for selecting a resource to be operated as the balancing power from among the resources (500) in response to a charging request for the balancing power. The computer (600) determines chargeable periods of the resources (500) prior to the resource selection. The computer (600) selects a resource having a short chargeable period with priority in the resource selection in response to a first charging request, and selects a resource having a long chargeable period with priority in the resource selection in response to a second charging request. A balancing period requested in the second charging request is longer than a balancing period requested in the first charging request.

## Description

### BACKGROUND OF THE INVENTION

### 1. Field of the Invention

The present invention relates to a computer and a power balancing method.

### 2. Description of Related Art

For example, Japanese Patent No. 5562423 (JP 5562423 B) discloses a technology in which charging/discharging commands necessary to level power supply and demand by suppressing both fluctuation in the power supply and demand of power consumers as a whole and imbalance in the power supply and demand among the power consumers are set for batteries of a plurality of battery electric vehicles and the charging and discharging of corresponding batteries are controlled based on the set charging/discharging commands. To level charging/discharging loads on the batteries, the charging/discharging commands are set to distribute a larger charging/discharging amount for a battery having a larger usable capacity than a battery having a smaller usable capacity.

### SUMMARY OF THE INVENTION

As described above, the battery electric vehicle including the battery can operate as a balancing power for an external power supply (for example, a balancing power for leveling the power supply and demand). In the technology disclosed in JP 5562423 B, the battery electric vehicle including the battery corresponds to a resource that can operate as the balancing power for the external power supply.

When a balancing period requested in a charging request is long, it may not be possible to meet the request with one resource alone. In response to such a charging request, a first resource may be charged first. A second resource may start charging before the chargeable period of the first resource (limit period during which the charging can be continued) is exceeded, and the charging of the first resource may be terminated in accordance with the charging start timing of the second resource. The charging is continued by charging the second resource in place of the first resource. By continuing the charging while changing the resource to be charged in response to the charging request (hereinafter referred to also as "charging resource"), it is possible to charge for the balancing power for the external power supply over a long period. In such a power balancing method, however, a component that controls the charging resource (for example, a charging relay) is likely to deteriorate when the number of times the charging resource is changed (that is, the number of times the resources are switched in the power balancing) increases. In addition, a charging interruption (that is, a period during which the charging is not performed by any resource) may occur during the resource switching (that is, between the end of charging of a previous resource and the start of charging of a subsequent resource). Therefore, it is desirable that the resources be selected in response to the charging request to reduce the number of times of resource switching. These problems are not unique to the charging for the balancing power for the external power supply (that is, the charging in response to the charging request), and similar problems may occur in the discharging for the balancing power for the external power supply (that is, the discharging in response to a discharging request).

In JP 5562423 B, research has been conducted for the distribution of the charging/discharging amount for each resource, but is insufficient for the selection of the resource in response to the charging request or the discharging request for the balancing power for the external power supply.

The present invention has been made to solve the problems described above, and an obj ect thereof is to select resources that operate as the balancing power for the external power supply to reduce the number of times of resource switching.

A computer according to a first aspect of the present invention is configured to manage a plurality of resources operable as a balancing power for an external power supply. Each of the resources includes a power storage device chargeable with electric power from the external power supply. The computer is configured to execute resource selection for selecting a resource to be operated as the balancing power from among the resources in response to a charging request for the balancing power. The computer is configured to determine chargeable periods of the resources prior to the resource selection. The computer is configured to select a resource having a short chargeable period with priority in the resource selection in response to a first charging request. The computer is configured to select a resource having a long chargeable period with priority in the resource selection in response to a second charging request. A balancing period requested in the second charging request is longer than a balancing period requested in the first charging request.

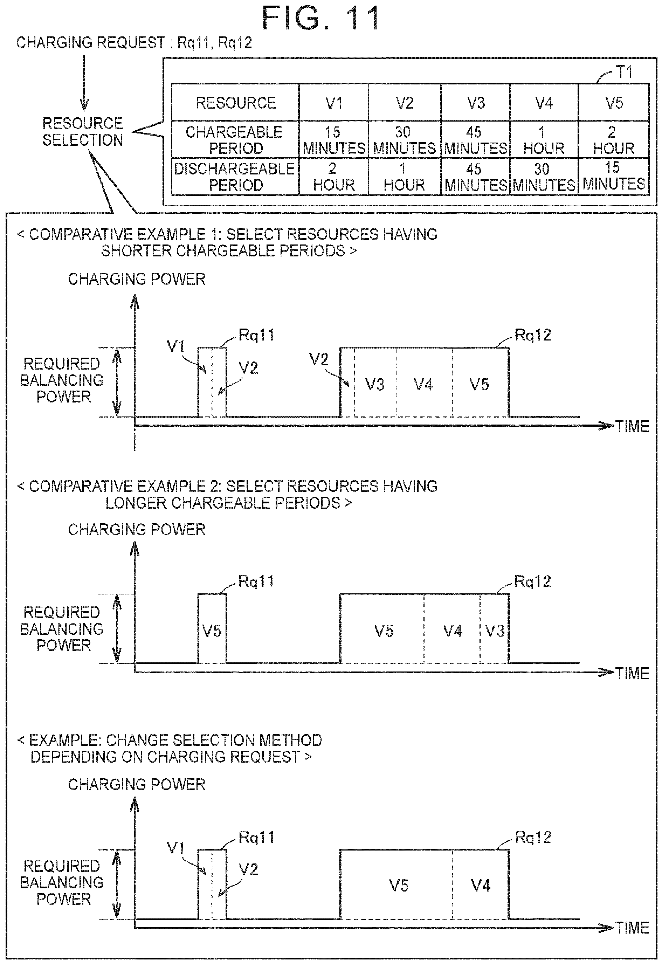

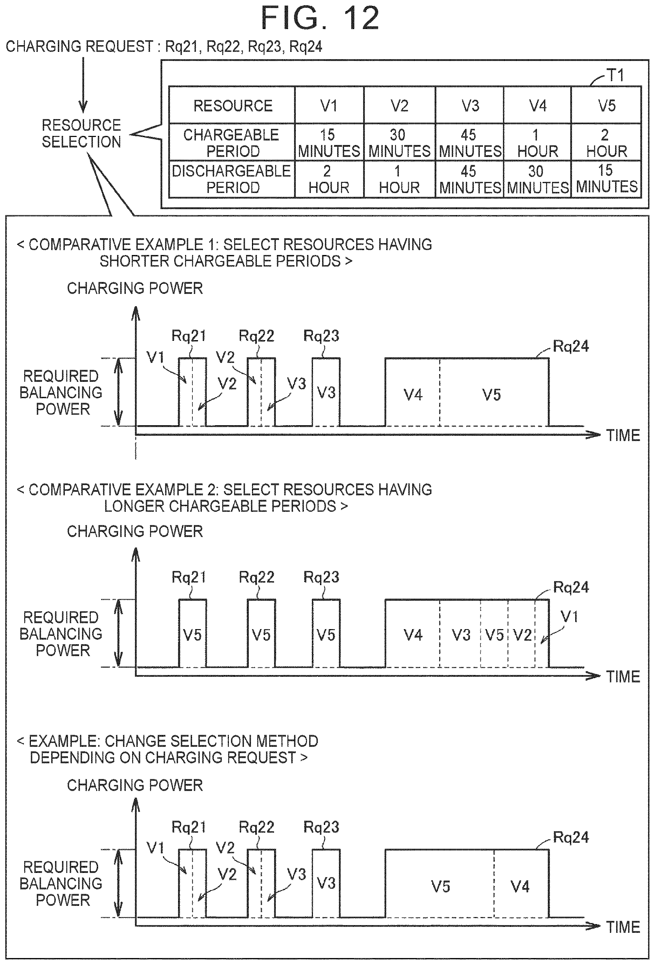

Although details will be described later, according to the configuration described above, it is possible to select resources that operate as the balancing power for the external power supply to reduce the number of times of resource switching (see, for example, FIGS. 11 and 12). The computer described above is hereinafter referred to also as "management computer".

The balancing period is a period in which the offer of the balancing power is requested, and is generally referred to also as "offer period". The length of the balancing period is generally referred to also as "duration". The balancing power means the overall ability to balance electric power in the external power supply (frequency control, supply and demand balancing, etc.), and also includes a reserve power.

The external power supply may be a power grid (for example, a microgrid or a large-scale power grid developed as an infrastructure). The external power supply may supply alternating current power or direct current power.

The management computer may be configured to trade the balancing power in an electricity market and generate the charging request when a bid is won in the electricity market for the balancing power for increase in demand. The balancing power may be traded in units of frames in the electricity market. The management computer may be configured to regard a charging request for the balancing power in a predetermined number of frames or less as the first charging request. The management computer may be configured to regard a charging request for the balancing power in more than the predetermined number of frames as the second charging request.

According to the configuration described above, it is possible to select the resources that operate as the balancing power of the winning bid in the electricity market to reduce the number of times of resource switching.

The length of the frame may be 30 minutes. The predetermined number of frames may be one. In the electricity market, trading may be carried out for 48 frames that segment one day in units of 30 minutes. The length of the frame (unit period) traded in the electricity market varies depending on countries or regions. For example, in a configuration in which the length of the frame is 5 minutes, the predetermined number of frames may be selected from a range of four or more and ten or less.

The management computer may be configured to generate the charging request when imbalance of insufficient demand has occurred in terms of balancing of the external power supply. The management computer may be configured to regard a charging request for eliminating the imbalance as the first charging request.

In the adjustment of the imbalance in terms of the balancing, there is a tendency toward a request to adjust small power fluctuation at an early stage. Therefore, in the configuration described above, the charging request for eliminating the imbalance is regarded as the first charging request. This makes it easier to reduce the number of times of resource switching.

The imbalance in terms of the balancing corresponds to, for example, a difference between a planned supply and demand value and an actual supply and demand value. When the actual value of demand (power consumption) is larger than the planned value contrary to demand prediction, imbalance occurs in terms of the balancing. When the actual value of supply (generated electric power) is larger than the planned value contrary to power generation prediction (for example, prediction of electric power to be generated by solar power generation or wind power generation), imbalance occurs in terms of the balancing.

The management computer may be configured to classify each of the resources into a category corresponding to the chargeable period of the resource among a plurality of categories in which different chargeable period ranges are set. The management computer may be configured to regard the resources belonging to the same category as resources having the same chargeable period.

According to the configuration described above, the resource selection is facilitated. The management computer may estimate the chargeable period by using information about the resource (for example, information indicating the type of the resource), and classify the resource into any one of the categories based on the estimated chargeable period. The number of categories is arbitrary, and may be two or more and less than ten, three or more and five or less, or ten or more.

The management computer may be configured to calculate the chargeable period of each of the resources by using a state of charge (SOC) of the power storage device of each of the resources and rated charging power of the power storage device.

As the SOC at the start of charging decreases, the chargeable period tends to increase. The SOC is information indicating the ratio of the remaining power storage amount to the full charge capacity of the power storage device. As the rated charging power increases, the chargeable period tends to decrease. Therefore, according to the configuration described above, it is easier to accurately determine the chargeable period of each resource. The management computer may be configured to calculate the chargeable period of each of the resources by further using information about the full charge capacity (power storage amount in a fully charged state) and charging limitation of the resource.

The resources may include a vehicle electrically connectable to the external power supply via charging equipment. It is easier to secure a sufficient balancing power for the charging request by utilizing an in-vehicle battery.

The management computer may be configured to remotely control the resource selected by the resource selection to operate as the balancing power.

The management computer can easily and accurately operate the power storage device as the balancing power by remotely controlling the resource (charging control on the power storage device).

The management computer may be configured to determine target electric energy for the charging request. The management computer may be configured to select the resource in the resource selection to cause a total of electric energy balanced by the selected resource to reach the target electric energy.

According to the configuration described above, it is easier to secure sufficient balancing electric energy (charging energy) for the charging request.

A computer according to a second aspect of the present invention is configured to manage a plurality of resources operable as a balancing power for an external power supply. Each of the resources includes a power storage device configured to discharge electric power to the external power supply. The computer is configured to execute resource selection for selecting a resource to be operated as the balancing power from among the resources in response to a discharging request for the balancing power. The computer is configured to determine dischargeable periods of the resources prior to the resource selection. The computer is configured to select a resource having a short dischargeable period with priority in the resource selection in response to a first discharging request. The computer is configured to select a resource having a long dischargeable period with priority in the resource selection in response to a second discharging request. A balancing period requested in the second discharging request is longer than a balancing period requested in the first discharging request.

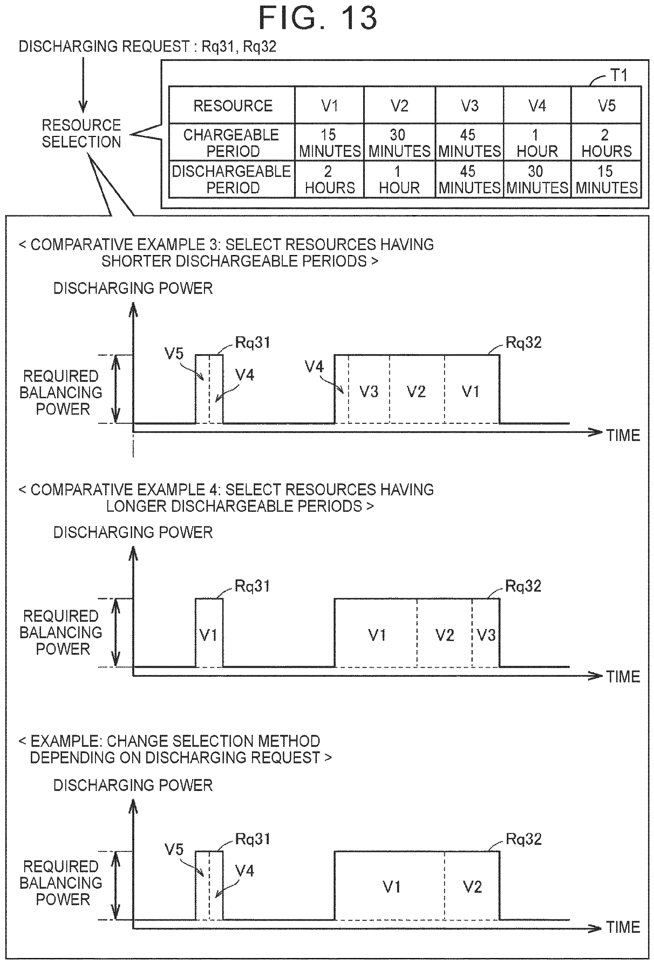

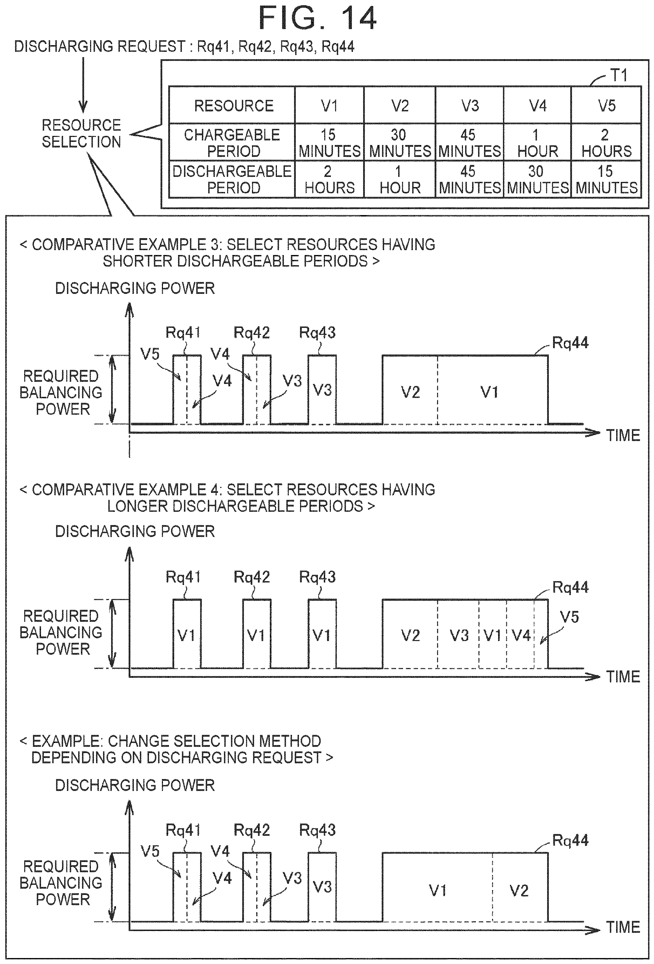

The computer is configured to balance electric power by discharging. Although details will be described later, according to the computer having the configuration described above, it is possible to select resources that operate as the balancing power for the external power supply to reduce the number of times of resource switching (see, for example, FIGS. 13 and 14) in a manner basically similar to that of the computer that balances electric power by charging as described above.

A power balancing method according to a third aspect of the present invention includes determining chargeable periods of a plurality of resources operable as a balancing power for an external power supply, determining whether a charging request for the balancing power is a first charging request or a second charging request for power balancing in a balancing period longer than a balancing period of the first charging request, selecting a resource having a short chargeable period with priority in resource selection in response to the charging request when determination is made that the charging request is the first charging request, selecting a resource having a long chargeable period with priority in resource selection in response to the charging request when determination is made that the charging request is the second charging request, and causing the resource selected in the resource selection in response to the charging request to operate as the balancing power for the external power supply.

As in the case of the computer that balances electric power by charging as described above, the power balancing method makes it possible to select resources that operate as the balancing power for the external power supply to reduce the number of times of resource switching. According to the method described above, it is possible to appropriately balance the electric power in the external power supply by the selected resources.

A power balancing method according to a fourth aspect of the present invention includes determining dischargeable periods of a plurality of resources operable as a balancing power for an external power supply, determining whether a discharging request for the balancing power is a first discharging request or a second discharging request for power balancing in a balancing period longer than a balancing period of the first discharging request, selecting a resource having a short dischargeable period with priority in resource selection in response to the discharging request when determination is made that the discharging request is the first discharging request, selecting a resource having a long dischargeable period with priority in resource selection in response to the discharging request when determination is made that the discharging request is the second discharging request, and causing the resource selected in the resource selection in response to the discharging request to operate as the balancing power for the external power supply.

As in the case of the computer that balances electric power by discharging as described above, the power balancing method makes it possible to select resources that operate as the balancing power for the external power supply to reduce the number of times of resource switching. According to the method described above, it is possible to appropriately balance the electric power in the external power supply by the selected resources.

According to the present invention, it is possible to select resources that operate as the balancing power for the external power supply to reduce the number of times of resource switching.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a schematic configuration of a power management system according to an embodiment of the present invention;
FIG. 2 is a diagram showing a state of each resource when power balancing of an external power supply is performed in the power management system shown in FIG. 1;
FIG. 3 is a diagram showing a detailed configuration of a management computer according to the embodiment of the present invention;
FIG. 4 is a flowchart showing a process related to acquisition of resource information and executed by the management computer shown in FIG. 3;
FIG. 5 is a diagram showing an outline of an electricity market according to the embodiment of the present invention;
FIG. 6 is a flowchart showing a process related to market trading and executed by the management computer shown in FIG. 3;
FIG. 7 is a flowchart showing a process related to resource selection in response to a charging request in a power balancing method according to the embodiment of the present invention;
FIG. 8 is a flowchart showing a process related to resource selection in response to a discharging request in the power balancing method according to the embodiment of the present invention;
FIG. 9 is a flowchart showing a process related to power balancing and executed by a server of a TSO shown in FIG. 1;
FIG. 10 is a flowchart showing a process related to securement of a balancing power for eliminating imbalance and executed by the management computer shown in FIG. 3;
FIG. 11 is a diagram showing results of resource selection by methods according to Comparative Example 1, Comparative Example 2, and Example in a first case;
FIG. 12 is a diagram showing results of resource selection by the methods according to Comparative Example 1, Comparative Example 2, and Example in a second case;
FIG. 13 is a diagram showing results of resource selection by the methods according to Comparative Example 3, Comparative Example 4, and Example in a third case;
FIG. 14 is a diagram showing results of resource selection by the methods according to Comparative Example 3, Comparative Example 4, and Example in a fourth case;
FIG. 15 is a flowchart showing a modification of the process shown in FIG. 7;
FIG. 16 is a diagram showing results of resource selection in response to a charging request by a method according to the modification shown in FIG. 15 in fifth and sixth cases;
FIG. 17 is a diagram showing an example of simultaneous charging of a plurality of resources in the same period;
FIG. 18 is a flowchart showing a modification of the process shown in FIG. 8;
FIG. 19 is a diagram showing results of resource selection in response to a discharging request by a method according to the modification shown in FIG. 18 in seventh and eighth cases; and
FIG. 20 is a diagram showing an example of simultaneous discharging of a plurality of resources in the same period.

### DETAILED DESCRIPTION OF EMBODIMENTS

An embodiment of the present invention will be described in detail with reference to the drawings. The same or corresponding parts are denoted by the same signs throughout the drawings, and description thereof will not be repeated.

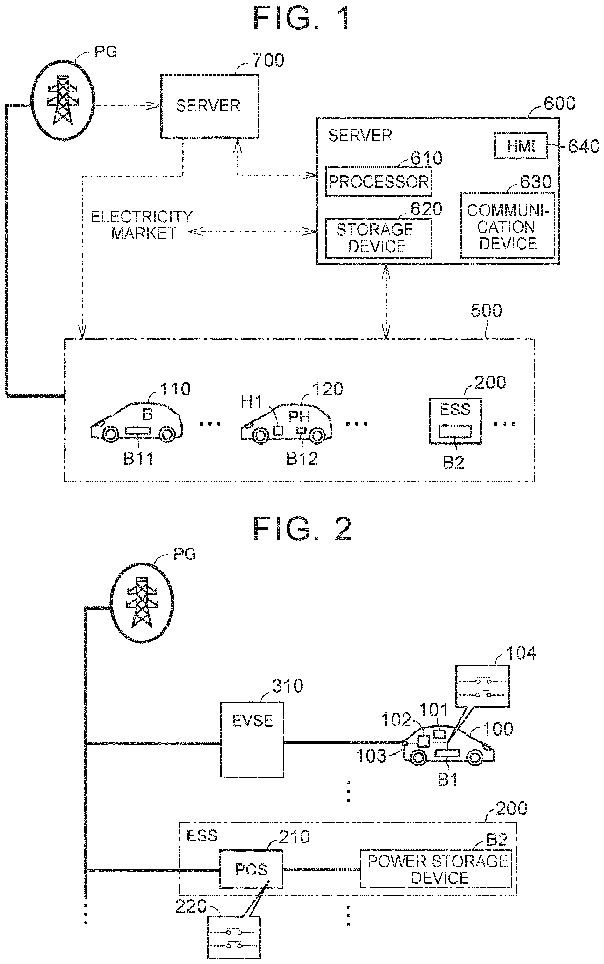

FIG. 1 is a diagram showing a schematic configuration of a power management system according to the embodiment of the present invention. Referring to FIG. 1, the power management system according to this embodiment includes a resource group 500, a server 600, and a server 700.

The server 600 manages the resource group 500. The resource group 500 includes a plurality of resources including power storage devices. Each resource is electrically connectable to a power system PG. Each resource functions as a balancing power for balancing electric power in the power system PG. In this embodiment, the resource group 500 includes a battery electric vehicle (BEV) 110, a plug-in hybrid electric vehicle (PHEV) 120, and an energy storage system (ESS) 200 as the resources. Although one resource is shown for each type (BEV, PHEV, ESS) in FIG. 1, the number of resources of each type in the resource group 500 is arbitrary independently, and may be 10 or more and less than 100, or may be 100 or more.

The BEV 110, the PHEV 120, and the ESS 200 include a battery B11, a battery B12, and a power storage device B2, respectively. Each of the batteries B11 and B12 and the power storage device B2 is a chargeable and dischargeable power storage device. These power storage devices are chargeable with electric power from the power system PG and configured to discharge electric power to the power system PG.

Each of the BEV 110 and the PHEV 120 is an xEV configured to travel by using electric power stored in the battery (power storage device). The xEV is a vehicle that uses electric power as all or part of a driving power source. Specifically, each of the BEV 110 and the PHEV 120 supplies electric power from the battery to an electric motor (not shown) and travels by driving power generated by the electric motor. The number of electric motors for traveling is arbitrary, and may be one, two, three, or more. The electric motor may be an in-wheel motor. Each of the batteries B11 and B12 may be a known vehicle power storage device (for example, a liquid secondary battery, a solid-state secondary battery, or a battery pack). Examples of the secondary batteries for vehicles include a lithium ion battery and a nickel metal hydride battery.

A traveling energy storage device in the BEV 110 is only the battery B11. The PHEV 120 includes a traveling energy storage device in addition to the power storage device (battery B12). The PHEV 120 includes a driving power source H1 for traveling. The driving power source H1 includes an internal combustion engine and a fuel tank that supplies fuel to the internal combustion engine. The PHEV 120 can travel by driving power output from the internal combustion engine without using electric power. The fuel tank corresponds to the traveling energy storage device. The fuel for the internal combustion engine is arbitrary and may be gasoline, light oil, or hydrogen.

The ESS 200 is a stationary resource. The ESS 200 may be provided in a building (detached house, apartment, commercial facility, factory, hospital, school, etc.). The ESS 200 may supply electric power to a power load installed in the building (for example, air conditioning equipment, floor heating equipment, lighting equipment, cooking equipment, or a water heater in a house). The ESS 200 may function as an emergency power supply for the building. The ESS 200 may store surplus electric power generated by a power generation facility installed in the building (renewable energy power generation facility such as a solar power generation facility or a wind power generation facility). The renewable energy is abbreviated as "RE". The power storage device B2 may be a known stationary power storage device (for example, a lithium ion battery, a lead-acid battery, a nickel metal hydride battery, a redox flow battery, or a sodium-sulfur (NAS) battery).

The power system PG is a power grid constructed by power transmission and distribution equipment. A plurality of power plants is connected to the power system PG. The power system PG is supplied with electric power from those power plants. In this embodiment, an electric power company maintains and manages the power system PG (commercial power supply). The electric power company corresponds to a system operator (TSO) described later. The power system PG supplies alternating current power (for example, three-phase alternating current power). The server 700 is, for example, a computer belonging to the TSO. The server 700 incorporates a central feed system and a simple command system described later. The server 600 and the server 700 are configured to communicate with each other.

FIG. 2 is a diagram showing a state of each of the BEV 110, the PHEV 120, and the ESS 200 when power balancing of the power system PG is performed. Unless otherwise distinguished, the BEV 110 and the PHEV 120 are hereinafter referred to as "xEV 100", and the batteries B11 and B12 are hereinafter referred to as "battery B1".

Referring to FIG. 1 and FIG. 2, the xEV 100 includes an electronic control unit (ECU) 101, a charging/discharging device 102, an inlet 103, and a charging/discharging relay 104. The xEV 100 performs the power balancing of the power system PG while being electrically connected to the power system PG via electric vehicle supply equipment (EVSE) 310. The xEV 100 and the power system PG are electrically connected to each other by connecting a plug of the EVSE 310 (for example, a plug provided at the tip of a charging cable connected to the body of the EVSE 310) to the inlet 103 of the xEV 100. The state in which the xEV 100 and the power system PG are electrically connected to each other is hereinafter referred to as "xEV connected state". The state in which the xEV 100 and the power system PG are not electrically connected to each other is hereinafter referred to as "xEV disconnected state". The traveling xEV 100 is in the xEV disconnected state.

The charging/discharging device 102 is positioned between the inlet 103 and the battery B1 and is controlled by the ECU 101. The charging/discharging device 102 includes, for example, an inverter. The charging/discharging relay 104 is positioned between the charging/discharging device 102 and the battery B1. The charging/discharging relay 104 is controlled by the ECU 101. In a situation in which electric power is not exchanged between the inlet 103 and the battery B1 (for example, while the xEV 100 is traveling), the charging/discharging relay 104 is open (cut off). When electric power is exchanged between the inlet 103 and the battery B1 in the xEV connected state, the ECU 101 closes (connects) the charging/discharging relay 104. When the xEV 100 stores electric power supplied from the power system PG, the ECU 101 controls the charging/discharging device 102 so that appropriate electric power is input from the inlet 103 to the battery B1. When the xEV 100 outputs electric power toward the power system PG, the ECU 101 controls the charging/discharging device 102 so that appropriate electric power is output from the battery B1 to the inlet 103.

The xEV 100 communicates with the server 600 via the EVSE 310 in the xEV connected state. The server 600 and the EVSE 310 may communicate with each other via the Internet. The server 600 can control the charging/discharging device 102 by transmitting a command to the xEV 100 via the EVSE 310. The server 600 can remotely control the battery B1 to perform charging for the power balancing of the power system PG. The server 600 can remotely control the battery B1 to perform discharging for the power balancing of the power system PG.

The xEV 100 may be a privately owned vehicle (POV) or a Mobility-as-a-Service (MaaS) vehicle. The MaaS vehicle is a vehicle managed by a MaaS provider. The xEV 100 may include a wireless communication device (for example, a data communication module (DCM)) that can access a mobile communication network (telematics), and wirelessly communicate with the server 600 through the mobile communication network without intermediation of the EVSE. The xEV 100 may receive a command or notification from the server 600 by the wireless communication device. In this embodiment, the xEV 100 having a V2G function (function of exchanging electric power bidirectionally with the power system) is used as the resource (balancing power). The xEV 100 may further have a vehicle-to-home (V2H) function.

The configuration of the xEV 100 described above is only an example. In the example described above, alternating current power is supplied from the power system PG to the xEV 100 via the EVSE 310, the alternating current power is converted into direct current power by the charging/discharging device 102, and the direct current power is input to the battery B1. The function of the charging/discharging device 102 may be implemented in the EVSE instead of the xEV. A charging/discharging device may be built in a connector of the charging cable. The alternating current power supplied from the power system may be converted into direct current power by the EVSE, and the direct current power may be output from the EVSE to the xEV.

The ESS 200 further includes a power conditioning system (PCS) 210. The power system PG is connected to the power storage device B2 via the PCS 210. The PCS 210 and the power system PG are electrically connected to each other. The ESS 200 is always electrically connected to the power system PG. The PCS 210 is configured to communicate with the server 600. The server 600 and the PCS 210 may communicate with each other via the Internet. The PCS 210 includes an operation control device, a protection device, and a power conversion circuit (none of which are shown). The PCS 210 includes a charging/discharging relay 220. The PCS 210 can switch electrical connection and disconnection between the power storage device B2 and the power system PG by controlling the charging/discharging relay 220. The PCS 210 switches the electrical connection and disconnection between the power storage device B2 and the power system PG, for example, in response to a request from the server 600. In the PCS 210, the operation control device controls the power conversion circuit in response to a command from the server 600. The power conversion circuit includes, for example, an inverter. The server 600 can control charging and discharging of the power storage device B2 by transmitting a charging/discharging command to the PCS 210.

The server 600 can remotely control the power storage device B2 to perform charging or discharging for the power balancing of the power system PG. Specifically, when the ESS 200 stores electric power supplied from the power system PG, the power conversion circuit of the PCS 210 is controlled so that appropriate electric power is input from the power system PG to the power storage device B2 via the PCS 210. When electric power is output from the ESS 200 to the power system PG, the power conversion circuit of the PCS 210 is controlled so that appropriate electric power is output from the power storage device B2 to the power system PG via the PCS 210.

Each of the xEV 100 (ECU 101) and the ESS 200 (PCS 210) is configured to communicate not only with the server 600 but also with the server 700. Each of the charging/discharging device 102 of the xEV 100 and the PCS 210 of the ESS 200 may remotely be controlled by the server 700 instead of the server 600.

The server 600 manages a plurality of EVSEs 310 and a plurality of PCSs 210 provided in a predetermined area to which the power system PG supplies electric power. The EVSEs 310 may include public EVSE 310 available to any users (for example, EVSE installed along a road or in a public facility) and non-public EVSE 310 available only to a specific user (for example, household EVSE). The server 600 is, for example, a computer belonging to an aggregator. The aggregator is an electric power company that provides an energy management service by bundling a plurality of distributed energy resources (hereinafter referred to also as "DERs"). Each of the xEV 100 and the ESS 200 can function as the DER. The server 600 may cause these DERs to function as a virtual power plant (VPP) by remotely and centrally controlling the DERs. The VPP is a mechanism that bundles a large number of DERs by an advanced energy management technology using Internet of Things (IoT) and causes the DERs to function as if they were a single power plant by remotely and centrally controlling the DERs. The server 600 may perform demand response (DR) for each DER. The power system PG and the server 600 according to this embodiment correspond to examples of the "external power supply" and the "computer" according to the present invention, respectively.

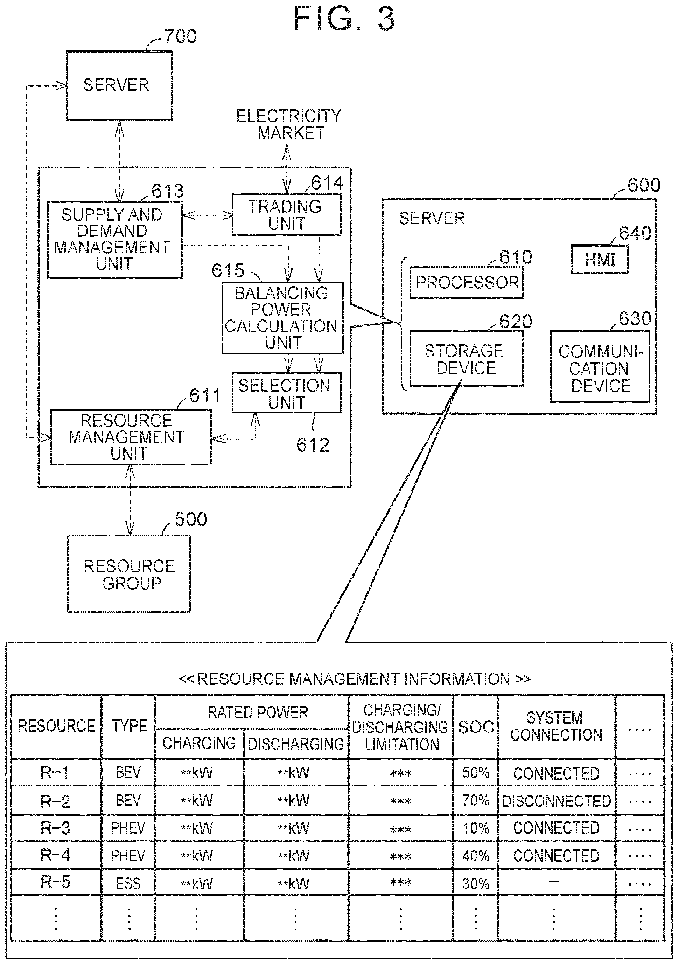

FIG. 3 is a diagram showing a detailed configuration of the server 600. Referring to FIG. 3, the server 600 includes a processor 610, a storage device 620, a communication device 630, and a human-machine interface (HMI) 640. The processor 610 may be a central processing unit (CPU). The number of processors in the server 600 is arbitrary and may be one or plural. The storage device 620 can save various types of information. The storage device 620 stores programs to be executed by the processor 610 and information to be used in the programs (for example, maps, mathematical expressions, and various parameters). The communication device 630 includes various communication interfaces (I/Fs). The server 600 communicates with the outside through the communication device 630. The HMI 640 includes an input device and a display device. The HMI 640 may include a touch panel display. The HMI 640 may include a smart speaker that receives voice inputs.

In this embodiment, the server 600 includes a resource management unit 611, a selection unit 612, a supply and demand management unit 613, a trading unit 614, and a balancing power calculation unit 615 described below. These units are embodied, for example, by the processor 610 and the programs executed by the processor 610. These units are not necessarily embodied by the processor 610 and the programs, and may be embodied by dedicated hardware (electronic circuit).

The resource management unit 611 acquires information on each resource from the resource group 500. For example, the state of each resource may be transmitted from each resource to the server 600. The resource management unit 611 may update resource management information stored in the storage device 620 based on the information acquired from each resource.

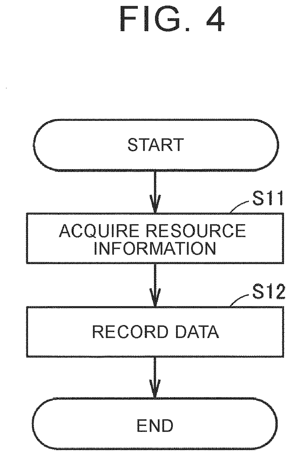

FIG. 4 is a flowchart showing a process related to acquisition of resource information and executed by the server 600. The process shown in this flowchart is executed for each resource. The resource to be processed is hereinafter referred to as "target resource". The server 600 repeatedly executes the process shown in FIG. 4, for example, at a predetermined cycle. However, the present invention is not limited to this case, and the condition for executing the process shown in FIG. 4 can arbitrarily be set for each resource. For example, for the target resource that is the xEV, the process shown in FIG. 4 may be executed at a timing when the xEV connected state and the xEV disconnected state are switched. Each step in the flowchart is hereinafter denoted simply by a step number that starts with the letter "S".

Referring to FIGS. 1 to 3 and 4, the server 600 acquires information about the target resource (hereinafter referred to as "resource information") in S11. For example, when the target resource is the ESS 200, the server 600 communicates with the PCS 210 and acquires the resource information from the PCS 210. When the target resource is the xEV 100, the server 600 communicates with the ECU 101 and acquires the resource information from the ECU 101.

In this embodiment, the server 600 acquires a state of charge (SOC), a full charge capacity (power storage amount in a fully charged state), rated charging power, and rated discharging power of the power storage device in the target resource in S11. The SOC indicates the remaining power storage amount of the power storage device. For example, the SOC is the ratio of a current power storage amount to the full charge capacity and varies between 0% and 100%. The rated charging power is the maximum charging power in the design of the power storage device indicated by a manufacturer of the power storage device. The rated discharging power is the maximum discharging power in the design of the power storage device indicated by the manufacturer of the power storage device.

In S 11, the server 600 further acquires information about charging limitation and discharging limitation of the target resource. Examples of the charging limitation include SOC charging limitation and input limitation. The SOC charging limitation is a process of limiting the charging of the power storage device so that the SOC of the power storage device does not exceed an upper limit value lower than 100% (hereinafter referred to also as "SOC upper limit value"). In the power storage device subjected to the SOC charging limitation, the upper limit of the SOC is lower than 100%. The input limitation is a process of limiting the charging of the power storage device so that the charging power or the charging current of the power storage device does not exceed an upper limit value (hereinafter referred to also as "upper limit power value"). In the power storage device subjected to the input limitation, the maximum charging power is lower than the rated charging power. Examples of the discharging limitation include SOC discharging limitation and output limitation. The SOC discharging limitation is a process of limiting the discharging of the power storage device so that the SOC of the power storage device does not fall below a lower limit value higher than 0% (hereinafter referred to also as "SOC lower limit value"). In the power storage device subjected to the SOC discharging limitation, the lower limit of the SOC is higher than 0%. The output limitation is a process of limiting the discharging of the power storage device so that the discharging power or the discharging current of the power storage device does not fall below a lower limit value (hereinafter referred to also as "lower limit power value"). In the power storage device subjected to the output limitation, the maximum discharging power is lower than the rated discharging power. In this embodiment, the server 600 acquires the SOC upper limit value, the upper limit power value, the SOC lower limit value, and the lower limit power value of the target resource as the resource information. Determination is made that the charging limitation and the discharging limitation are not performed on a target resource that does not output this information.

When the target resource is the xEV 100, the server 600 further acquires a system connection status of the target resource (xEV connected state or xEV disconnected state) in addition to the resource information. The information management method for the xEV differs depending on automobile manufacturers. Therefore, the contents of the resource information that the server 600 can acquire from the xEV 100 may vary for each xEV. When the server 600 cannot acquire information about specifications of the battery B1 from the xEV 100, the server 600 may acquire information indicating a powertrain type of the xEV 100 instead and estimate the specifications of the battery B1 (for example, the full charge capacity, the rated charging power, and the rated discharging power) from the powertrain type.

In S12, the server 600 updates the resource management information (FIG. 3) stored in the storage device 620 by using the resource information acquired in S11. When the target resource is not registered in the server 600, identification information (ID) is assigned to the target resource. Then, the data about the target resource is associated with the ID and added to the resource management information shown in FIG. 3.

As shown in FIG. 3, the resource management information according to this embodiment is distinguished based on the identification information (ID) for each resource and stored in the storage device 620 of the server 600. The ID of the resource may be a unique number assigned to each resource, or may be a communication address of the resource.

The resource management information includes a resource type (BEV, PHEV, or ESS) and the rated charging power and the rated discharging power described above. Each of the resource type, the rated charging power, and the rated discharging power may be preregistered in the server 600 (storage device 620). Alternatively, the server 600 may acquire the resource type, the rated charging power, and the rated discharging power from the target resource by the process of S11 in FIG. 4.

The resource management information further includes the SOC of the power storage device, the full charge capacity, and information on the charging limitation and the discharging limitation described above (for example, the SOC upper limit value, the upper limit power value, the SOC lower limit value, and the lower limit power value). The resource management information further includes the system connection status about the xEV (xEV connected state or xEV disconnected state). Although illustration is omitted in FIG. 3, the resource management information may further include a position of the resource (for example, longitude and latitude). The resource management information may further include a temperature of the power storage device. The resource management information may further include the presence or absence of an abnormality in the resource. The resource management information may further include a travel plan about the xEV. The server 600 may acquire these pieces of information by the process of S11 in FIG. 4.

The resource management unit 611 determines a chargeable period and a dischargeable period of each resource in the resource group 500.

In this embodiment, the resource management unit 611 determines the chargeable period of the resource based on the SOC, the full charge capacity, the rated charging power, and the upper limit power value and the SOC upper limit value of the charging limitation. Specifically, assuming that the resource charges the power storage device with the maximum charging power, the resource management unit 611 determines, as the chargeable period, a period from the start of the charging to a timing when the SOC of the power storage device reaches the upper limit value. The maximum charging power of the resource (maximum value of electric power with which the resource is chargeable) is the rated charging power for a power storage device that is not subjected to the input limitation, and is the upper limit power value of the input limitation for a power storage device that is subjected to the input limitation. As the maximum charging power decreases, the chargeable period increases. The upper limit value of the SOC is 100% for a power storage device that is not subjected to the SOC charging limitation, and is the SOC upper limit value of the SOC charging limitation for a power storage device that is subjected to the SOC charging limitation. As the upper limit value of the SOC decreases, the chargeable period decreases. In this embodiment, the resource management unit 611 regards a recently measured SOC of the power storage device as an SOC at the start of charging. The resource management unit 611 may predict the SOC at the start of charging by using predetermined information (for example, the system connection status and the travel plan about the xEV). As the SOC at the start of charging decreases, the chargeable period increases.

In this embodiment, the resource management unit 611 determines the dischargeable period of the resource based on the SOC, the full charge capacity, the rated discharging power, and the lower limit power value and the SOC lower limit value of the discharging limitation. Specifically, assuming that the resource discharges the power storage device with the maximum discharging power, the resource management unit 611 determines, as the dischargeable period, a period from the start of the discharging to a timing when the SOC of the power storage device reaches the lower limit value. The maximum discharging power of the resource (maximum value of electric power with which the resource is dischargeable) is the rated discharging power for a power storage device that is not subjected to the output limitation, and is the lower limit power value of the output limitation for a power storage device that is subjected to the output limitation. As the maximum discharging power decreases, the dischargeable period increases. The lower limit value of the SOC is 0% for a power storage device that is not subjected to the SOC discharging limitation, and is the SOC lower limit value of the SOC discharging limitation for a power storage device that is subjected to the SOC discharging limitation. As the lower limit value of the SOC increases, the dischargeable period decreases. In this embodiment, the resource management unit 611 regards a recently measured SOC of the power storage device as an SOC at the start of discharging. The resource management unit 611 may predict the SOC at the start of discharging by using predetermined information (for example, the system connection status and the travel plan about the xEV). As the SOC at the start of discharging increases, the dischargeable period increases.

The resource management unit 611 controls the resource selected by the selection unit 612. The resource management unit 611 remotely controls the resource selected by the selection unit 612 to operate as the balancing power. The resource management unit 611 may control the resource in response to a command from the server 700.

The supply and demand management unit 613 acquires supply and demand information of the power system PG from the server 700. The supply and demand management unit 613 monitors actual supply and demand of the power system PG. The actual supply and demand of the power system PG may be measured by a watt-hour meter provided for each resource, or may be measured by a common carriage measuring instrument. The watt-hour meter for each resource may include a smart meter or a watt-hour meter built in the EVSE 310 or the PCS 210. When imbalance of insufficient demand occurs in terms of balancing of the power system PG, the supply and demand management unit 613 generates a charging request for eliminating the imbalance. When imbalance of insufficient supply occurs in terms of the balancing of the power system PG, the supply and demand management unit 613 generates a discharging request for eliminating the imbalance.

The trading unit 614 makes trades in an electricity market. The trading unit 614 makes a bid in the electricity market and informs the supply and demand management unit 613 about a bid result. When the trading unit 614 wins the bid for a balancing power for increase in demand in the electricity market, the trading unit 614 generates a charging request. When the trading unit 614 wins the bid for a balancing power for increase in supply in the electricity market, the trading unit 614 generates a discharging request.

The balancing power calculation unit 615 calculates a target balancing power (target charging power) and target electric energy (target charging energy) for the charging request. In this embodiment, the balancing power calculation unit 615 determines, as the target charging energy, a value obtained by adding a predetermined margin (kWh) to electric energy (kWh) requested in the charging request. The balancing power calculation unit 615 determines, as the target charging power, a value obtained by adding a predetermined margin (kW) to a balancing power (kW) requested in a balancing period of the charging request.

The balancing power calculation unit 615 calculates a target balancing power (target discharging power) and target electric energy (target discharging energy) for the discharging request. In this embodiment, the balancing power calculation unit 615 determines, as the target discharging energy, a value obtained by adding a predetermined margin (kWh) to electric energy (kWh) requested in the discharging request. The balancing power calculation unit 615 determines, as the target discharging power, a value obtained by adding a predetermined margin (kW) to a balancing power (kW) requested in a balancing period of the discharging request.

The selection unit 612 executes resource selection from the resource group 500 in response to a charging request or a discharging request for a balancing power. The resource selection is a process of selecting a resource to be operated as a balancing power from the resources (including a power storage device) in the resource group 500. The selection unit 612 informs the resource management unit 611 about the selected resource.

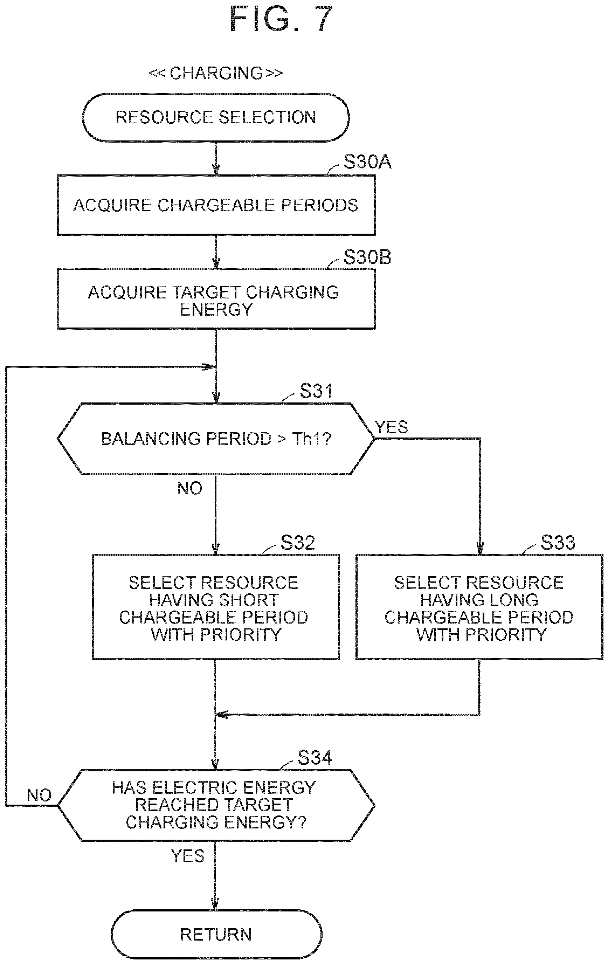

In this embodiment, when a charging request for a balancing power is generated, the supply and demand management unit 613 determines whether the charging request corresponds to a first charging request or a second charging request. The second charging request is a request for power balancing in a longer balancing period than that of the first charging request. That is, the balancing period requested in the second charging request is longer than the balancing period requested in the first charging request. The resource management unit 611 determines chargeable periods of the resources that are candidates for selection prior to the resource selection in response to the generated charging request. The selection unit 612 selects a resource having a short chargeable period with priority in the resource selection in response to the first charging request, and selects a resource having a long chargeable period with priority in the resource selection in response to the second charging request. Details of the resource selection in response to the charging request will be described later (see FIG. 7).

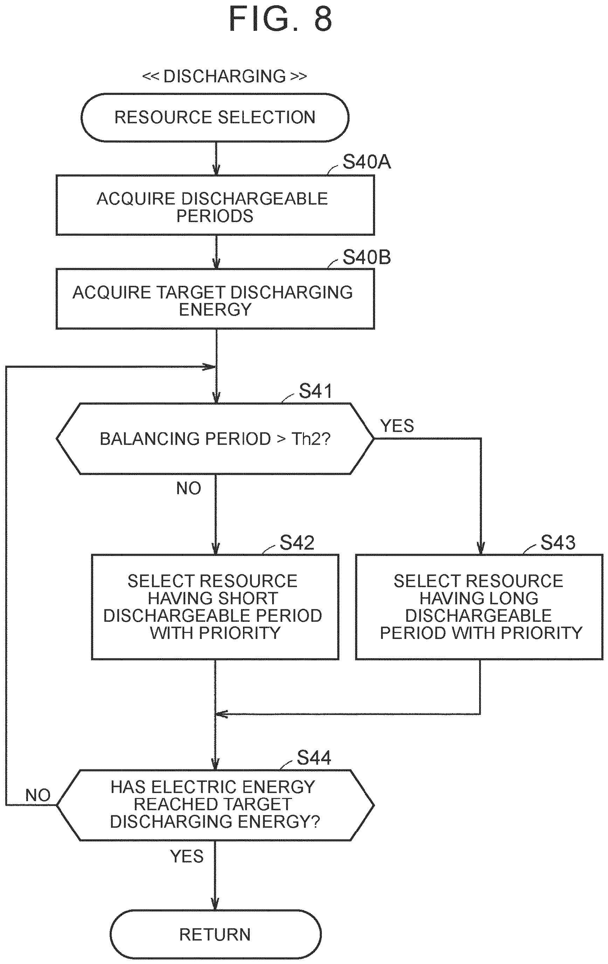

In this embodiment, when a discharging request for a balancing power is generated, the supply and demand management unit 613 determines whether the discharging request corresponds to a first discharging request or a second discharging request. The second discharging request is a request for power balancing in a longer balancing period than that of the first discharging request. That is, the balancing period requested in the second discharging request is longer than the balancing period requested in the first discharging request. The resource management unit 611 determines dischargeable periods of the resources that are candidates for selection prior to the resource selection in response to the generated discharging request. The selection unit 612 selects a resource having a short dischargeable period with priority in the resource selection in response to the first discharging request, and selects a resource having a long dischargeable period with priority in the resource selection in response to the second discharging request. Details of the resource selection in response to the discharging request will be described later (see FIG. 8).

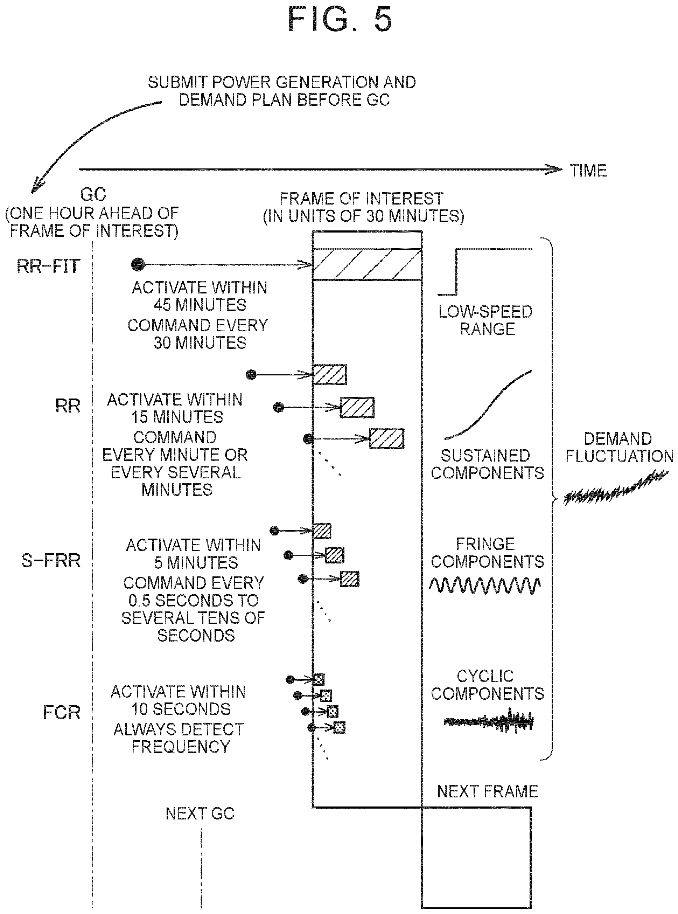

FIG. 5 is a diagram showing an outline of the electricity market according to this embodiment. Hereinafter, the electricity market according to this embodiment will be described with reference to FIG. 5. The electricity market described below is only an example. The computer (server 600) according to this embodiment is applicable to any electricity market.

A balancing group (BG) that uses the power system PG is responsible for achieving the balancing. The BG corresponds to a balance responsible party (BRP). Examples of the BG include a retail electric power company, a power generation company, and an aggregator. In this embodiment, a planned value balancing system is adopted. The BG submits a planned value for each frame to a predetermined organization in advance. The frame is a unit period that segments one day. In this embodiment, the length of the frame (unit period) is 30 minutes. The predetermined organization may be the Organization for Cross-regional Coordination of Transmission Operators (OCCTO). The imbalance in terms of the balancing (amount of discrepancy in the planned value) is evaluated for each frame. The BG that has caused the imbalance is obliged to pay an imbalance fee (penalty). The BG that frequently causes imbalance may be deprived of the license.

The electricity market according to this embodiment includes a spot market (day-ahead market), an hour-ahead market (intraday market), a supply and demand balancing market, and a capacity market. The spot market and the hour-ahead market are opened and operated by a wholesale electric power exchange such as the Japan Electric Power Exchange (JEPX). In each market, electric power is traded as a product. Each product is bought and sold by, for example, a bidding system. In each market, the product is traded on a frame basis. In the wholesale electric power exchange, trading is carried out for 48 frames that segment one day in units of 30 minutes. "Gate closing" (GC) in FIG. 5 indicates a market closing time for each frame. The GC corresponds to a time limit for a change of a planned value in the planned value balancing system. In this embodiment, the GC is one hour ahead of a frame start time. Before the GC, the BG can use the market to adjust a deviation between the planned value and the actual supply and demand in a frame of interest (frame corresponding to the GC). The BG may procure a balancing power for eliminating imbalance by demand response (DR).

The supply and demand balancing market is a market for an operator of the power system PG (hereinafter referred to as "transmission system operator (TSO)") to procure a balancing power. The TSO may be a general transmission and distribution business operator. The balancing power gives flexibility (ability to change production or consumption of electric power in response to power fluctuation) to the power system PG. After the GC, the TSO balances the supply and demand by using the balancing power procured through the supply and demand balancing market. The TSO controls the balancing power (resource) procured in the market by governor-free (GF), load frequency control (LFC), or economic load dispatch control (EDC). As a result, the balancing of the power system PG is achieved.

The balancing power to be traded in the supply and demand balancing market is roughly divided into a balancing power in normal cases and a balancing power in the event of accident. The balancing power in normal cases is further classified into a balancing power for prediction deviation and a balancing power for in-period fluctuation. The prediction deviation includes a demand prediction deviation and a renewable energy prediction deviation. The prediction deviation is an average deviation (30-minute average deviation) between a planned value and an actual value in each frame. The in-period fluctuation is fluctuation within the frame (shorter than 30 minutes).

The BG predicts demand and submits a demand plan before the GC. However, a prediction deviation (difference between a predicted value and an actual value of power demand) may occur after the GC. The balancing power for demand prediction deviation is a balancing power for eliminating the prediction deviation that occurs after the GC. The balancing power for renewable energy prediction deviation is a balancing power for eliminating the renewable energy prediction deviation (difference between a predicted value and an actual value of renewable energy output) presumed at the time of GC. The TSO mainly uses the LFC and the EDC to control the balancing power for prediction deviation.

Each of the power demand and the renewable energy output changes from moment to moment. Even if the predicted value and the actual value agree with each other in the 30-minute average, small fluctuation occurs in a period shorter than 30 minutes. The balancing power for in-period fluctuation is a balancing power that responds to the in-period fluctuation (fluctuation within less than 30 minutes) so that supply and demand agree with each other. Regarding the control on the balancing power for in-period fluctuation, the TSO responds to fluctuation within less than 1 minute by the GF and responds to fluctuation within 1 minute or more by the LFC or the EDC.

The balancing power in the event of accident is a balancing power for eliminating a difference between demand and supply caused by unpredictable trouble (for example, power failure). The TSO will procure backup power on the market in case of power failure. Regarding the control on the backup power (balancing power in the event of accident), the TSO responds by the GF immediately after the failure, and then switches to the LFC and the EDC in sequence.

Demand fluctuation can be subdivided into ultra-short-period components (cyclic components), short-period components (fringe components), and long-period components (sustained components).

In the supply and demand balancing market, a balancing power for cyclic components (primary balancing power) and a balancing power for fringe components (secondary balancing power 1) are traded. The primary balancing power corresponds to "frequency containment reserve (FCR)". Regarding the FCR, the response period is within 10 seconds and the duration is 5 minutes. The secondary balancing power 1 corresponds to "synchronized frequency restoration reserve (S-FRR)". Regarding the S-FRR, the response period is within 5 minutes and the duration is 30 minutes (one frame).

In the supply and demand balancing market, a balancing power for a sustained component corresponding to a difference from a previous frame (secondary balancing power 2) and a balancing power for a sustained component that continues from the previous frame (tertiary balancing power 1) are further traded. The secondary balancing power 2 corresponds to "frequency restoration reserve (FRR)". Regarding the FRR, the response period is within 5 minutes and the duration is 30 minutes (one frame). The tertiary balancing power 1 corresponds to "replacement reserve (RR)". Regarding the RR, the response period is within 15 minutes and the duration is 3 hours (six frames).

In the supply and demand balancing market, a balancing power for a special system that is feed-in tariff (FIT) (tertiary balancing power 2) is also traded. Under the FIT system, the TSO is responsible for imbalance in a power generation plan. The TSO predicts the renewable energy output two days ahead of the frame and determines a planned power generation value. On a day ahead of the frame, the TSO procures the tertiary balancing power 2 for eliminating the renewable energy prediction deviation (prediction deviation from the value two days ahead of the frame). The tertiary balancing power 2 corresponds to "replacement reserve for feed-in tariff (RR-FIT)". Regarding the RR-FIT, the response period is within 45 minutes and the duration is 3 hours (six frames).

In the capacity market, a power supply I' is traded. The power supply I' is a balancing power (reserve) for responding mainly to severe weather (extreme heat, severe cold, etc.) that may occur about once every 10 years. The power supply I' is always secured as a dedicated power supply of the TSO for a predetermined period. Regarding the power supply I', the response period is within 3 hours and the duration is 2 to 4 hours (4 to 8 frames).

An entity that has won a bid for the balancing power in the supply and demand balancing market (winning bidder) balances electric power within a range of a winning bid amount (ΔkW commitment amount) with respect to a reference value (kW). The winning bidder registers the reference value in the supply and demand balancing market system before the GC (one hour ahead of the start time of the frame of the winning bid). The winning bid amount may be positive (upward balancing power) or negative (downward balancing power). The winning bidder balances electric power in response to a command from the TSO in one or more frames (offer period) of the winning bid. When an output command value is changed during the offer period, the winning bidder changes the output to that value within the response period of the product requirement. When the output command value continues at the same value during the offer period, the winning bidder continues the output in response to the command for at least the duration of the product requirement.

The winning bidder notifies the TSO about the resources for use in the power balancing (for example, a list pattern). The server 700 of the TSO transmits a command to the resources of the winning bidder, for example, by a central power feed command system (central feed system) or a simple command system. The resources may be connected to the central feed system on a dedicated line. For example, when the server 700 controls the resource group 500 by the command described above, the server 700 may control the resources via the server 600 (aggregator) or may directly control the resources. After the end of all the frames of the winning bid, the winning bidder transmits record data of the resources in the frames to the TSO. The TSO checks, in every frame (30 minutes), that the winning bidder maintains a state in which the ΔkW commitment amount can be delivered during the offer period (balancing period of the balancing power of the winning bid) (ΔkW delivery possibility), and that the winning bidder is balancing electric power within the range of the ΔkW commitment amount in response to the command (response record). When at least one of assessment of the ΔkW delivery possibility (Assessment I) and assessment of the response record (Assessment II) reveals nonconformity with requirements stipulated for the trading target ΔkW, a predetermined penalty fee is imposed on the winning bidder.

The aggregator conducts electronic commerce by using the server 600. The server 600 trades a balancing power in the electricity market. Payment for market trading is managed by the server 600. When a bid for the balancing power for increase in demand is won in the electricity market, the server 600 generates a charging request corresponding to the balancing power of the winning bid. Then, the server 600 selects a resource to be operated as the balancing power from the resource group 500 in response to the charging request. When a bid for the balancing power for increase in supply is won in the electricity market, the server 600 generates a discharging request corresponding to the balancing power of the winning bid. Then, the server 600 selects a resource to be operated as the balancing power from the resource group 500 in response to the discharging request. Description will be given of an example in which the server 600 bids in the supply and demand balancing market.

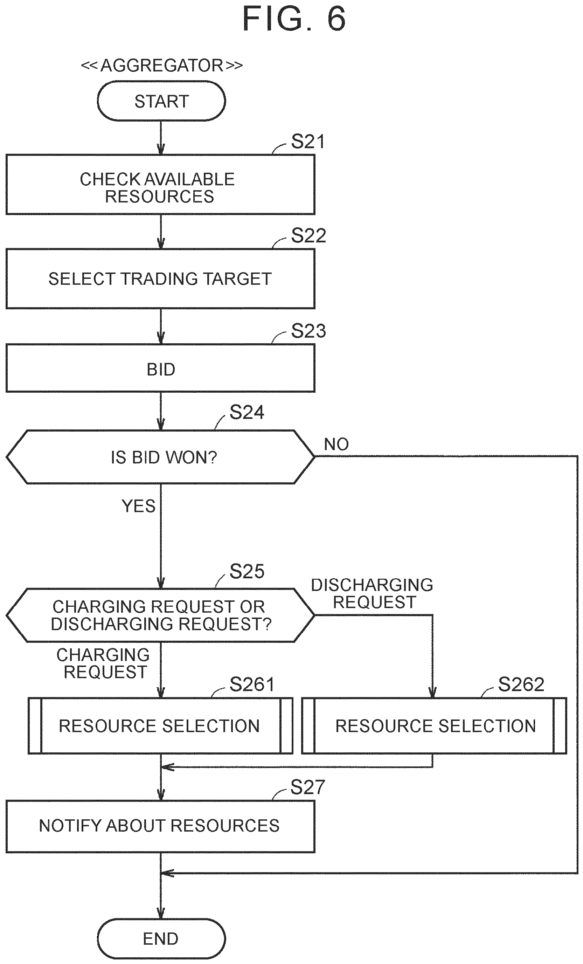

FIG. 6 is a flowchart showing a process related to market trading and executed by the server 600. The process shown in this flowchart is executed when a predetermined condition is satisfied. The predetermined condition may be satisfied at a predetermined time or may be satisfied periodically. The predetermined condition may be satisfied when the server 600 receives a bid instruction from a user. The server 600 may determine a timing suitable for bidding based on at least one of a market price, weather information (including weather forecast information), a demand history of the resource group 500, and the states of the resources in the resource group 500, and execute the process shown in FIG. 6 at the timing suitable for bidding.

Referring to FIGS. 1 to 3 and 6, the trading unit 614 checks resources available as a balancing power in the resource group 500 in S21. The trading unit 614 recognizes, for example, resources having no abnormality as the available resources. Regarding the xEVs, the trading unit 614 may exclude, from the available resources, xEVs whose travel schedules are set in frames corresponding to a trading target (target frames).

In S22, the trading unit 614 selects a trading target (bid product) based on the available balancing power (resources) checked in S21. In this embodiment, the trading target is the balancing power. In S23, the trading unit 614 bids for the selected trading target. The trading unit 614 may select and bid for the product under a preset condition. The trading unit 614 may select and bid for the product under a condition specified by the user. The trading unit 614 may select and bid for the product by using a trained model obtained by machine learning using artificial intelligence (AI).

In S24, the trading unit 614 determines whether the bid is won for the bid product (balancing power). When the bid is not won (NO in S24), the series of processes shown in FIG. 6 is terminated. However, the present invention is not limited to this case. The trading unit 614 may return the process to S22 and bid for another product when the bid is not won.

When the bid is won (YES in S24), the server 600 generates a charging request or a discharging request corresponding to the winning bid product. In S25, the supply and demand management unit 613 determines which of the charging request and the discharging request has been generated. When determination is made in S25 that the "charging request" has been generated, a process related to resource selection in response to the charging request is executed in S261. FIG. 7 is a flowchart showing details of S261.

Referring to FIGS. 1 to 3 and 7, the resource management unit 611 determines, in S30A, chargeable periods of the available resources by the method described above. In S30B, the balancing power calculation unit 615 calculates target charging power (kW) and target charging energy (kWh) in response to the charging request for the winning bid product (balancing power). In S31, the supply and demand management unit 613 determines whether the balancing period (offer period) of the winning bid product is longer than a predetermined threshold (hereinafter referred to as "Th1"). Although Th1 can be set arbitrarily, Th1 is set to one frame (30 minutes) in this embodiment. For example, when the winning bid product is one frame of FCR or S-FRR, the determination is "NO" in S31. For example, when the winning bid product is the RR, the RR-FIT, or the power supply I', the determination is "YES" in S31 because the duration is one hour or more (multiple frames).

When the length of the balancing period is equal to or smaller than Th1 (NO in S31), the process proceeds to S32. When the length of the balancing period is equal to or smaller than Th1, the charging request generated by the winning bid is the first charging request. In S32, the selection unit 612 selects a resource having a short chargeable period with priority from among the available resources. Prior to the selection, resources having extremely short chargeable periods (for example, resources whose chargeable periods are shorter than a predetermined period) may be excluded from the selection candidates.

When the balancing period is longer than Th1 (YES in S31), the process proceeds to S33. When the balancing period is longer than Th1, the charging request generated by the winning bid is the second charging request. In S33, the selection unit 612 selects a resource having a long chargeable period with priority from among the available resources.

When the process of S32 or S33 is executed, determination is made in S34 as to whether the total of electric energy balanced by the selected resources has reached the target charging energy (S30B). When the total of electric energy has not reached the target charging energy (NO in S34), the process returns to S31. The resource selection in S32 or S33 is repeated until the determination turns into "YES" in S34. In both S32 and S33, the selection unit 612 selects the resource based on the maximum charging power of each selection candidate resource so that the target charging power (S30B) is secured during the balancing period of the charging request. The selection unit 612 selects the resource so that the total of electric energy balanced by the selected resources approaches the target charging energy (S30B). In S32, the resource having a short chargeable period is selected with priority. In S33, the resource having a long chargeable period is selected with priority. The selection unit 612 can calculate electric energy that can be balanced by the resource by using the maximum charging power and the chargeable period of the resource.

When the determination is "YES" in S34, the series of processes shown in FIG. 7 is terminated, and the process proceeds to S27 in FIG. 6.

Referring to FIGS. 1 to 3 and 6 again, when determination is made in S25 that the "discharging request" has been generated, a process related to resource selection in response to the discharging request is executed in S262. FIG. 8 is a flowchart showing details of S262.

Referring to FIGS. 1 to 3 and 8, the resource management unit 611 determines, in S40A, dischargeable periods of the available resources by the method described above. In S40B, the balancing power calculation unit 615 calculates target discharging power (kW) and target discharging energy (kWh) in response to the discharging request for the winning bid product (balancing power). In S41, the supply and demand management unit 613 determines whether the balancing period (offer period) of the winning bid product is longer than a predetermined threshold (hereinafter referred to as "Th2"). Although Th2 can be set arbitrarily, Th2 is set to one frame (30 minutes) in this embodiment. For example, when the winning bid product is one frame of FCR or S-FRR, the determination is "NO" in S41. For example, when the winning bid product is the RR, the RR-FIT, or the power supply I', the determination is "YES" in S41 because the duration is one hour or more (multiple frames).

When the length of the balancing period is equal to or smaller than Th2 (NO in S41), the process proceeds to S42. When the length of the balancing period is equal to or smaller than Th2, the discharging request generated by the winning bid is the first discharging request. In S42, the selection unit 612 selects a resource having a short dischargeable period with priority from among the available resources. Prior to the selection, resources having extremely short dischargeable periods (for example, resources whose dischargeable periods are shorter than a predetermined period) may be excluded from the selection candidates.

When the balancing period is longer than Th2 (YES in S41), the process proceeds to S43. When the balancing period is longer than Th2, the discharging request generated by the winning bid is the second discharging request. In S43, the selection unit 612 selects a resource having a long dischargeable period with priority from among the available resources.

When the process of S42 or S43 is executed, determination is made in S44 as to whether the total of electric energy balanced by the selected resources has reached the target discharging energy (S40B). When the total of electric energy has not reached the target discharging energy (NO in S44), the process returns to S41. The resource selection in S42 or S43 is repeated until the determination turns into "YES" in S44. In both S42 and S43, the selection unit 612 selects the resource based on the maximum discharging power of each selection candidate resource so that the target discharging power (S40B) is secured during the balancing period of the discharging request. The selection unit 612 selects the resource so that the total of electric energy balanced by the selected resources approaches the target discharging energy (S40B). In S42, the resource having a short dischargeable period is selected with priority. In S43, the resource having a long dischargeable period is selected with priority. The selection unit 612 can calculate electric energy that can be balanced by the resource by using the maximum discharging power and the dischargeable period of the resource. When a single resource cannot respond during the entire balancing period of the winning bid product, the balancing period is divided and allocated to a plurality of resources.

When the determination is "YES" in S44, the series of processes shown in FIG. 8 is terminated, and the process proceeds to S27 in FIG. 6.

Referring to FIGS. 1 to 3 and 6 again, the resource management unit 611 notifies the server 700 in S27 about information for identifying the winning bid product (for example, a product ID) and the resources (list pattern) selected by the selection unit 612 for the product. The resource management unit 611 may notify the server 700 about the communication addresses, the maximum charging power, the chargeable periods, the maximum discharging power, and the dischargeable periods of the selected resources. The server 600 may replace the resources (list pattern) specified at the time of bidding by the notification in S27.

In S27, the resource management unit 611 notifies user terminals of the resources selected by the selection unit 612 about periods allocated to the resources (balancing start times and balancing end times). The user terminal may be a resource-mounted terminal (for example, the ECU 101 or the PCS 210) or a mobile terminal carried by the user (for example, a tablet terminal, a smartphone, a wearable device, an electronic key, or a service tool). The series of processes shown in FIG. 6 is terminated after the execution of the process in S27.

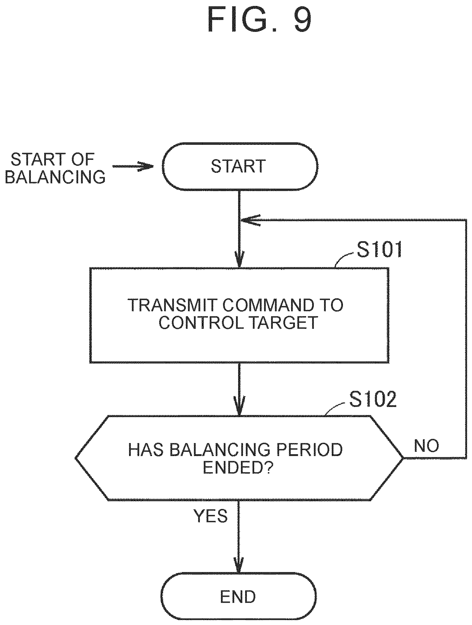

The server 700 balances electric power in the power system PG by using the balancing power (winning bid product) secured in the supply and demand balancing market. Specifically, the server 700 controls the resources selected for the product based on the notification from the server 600 (S27 in FIG. 6). FIG. 9 is a flowchart showing a process related to power balancing and executed by the server 700 (TSO). The process shown in this flowchart is started when a balancing start time of the winning bid product comes.

Referring to FIGS. 1 to 3 and 9, in S101, the server 700 generates a command to request a control target to balance electric power within the range of the ΔkW commitment amount based on a supply and demand status of the power system PG, and transmits the generated command to the control target. Specifically, the server 700 transmits, to the control target, a command indicating charging power or discharging power based on the supply and demand status of the power system PG. In a situation in which the balancing power is not required, the command may be a charging stop command or a discharging stop command indicating power of 0 kW. The control target to be controlled by this command is one or more resources in the notification from the server 600 (S27 in FIG. 6). The control target may change midway. For example, when the balancing period of the winning bid product is divided and allocated to a plurality of resources, the control target will be switched midway along the balancing period (specifically, at an end timing of a period allocated to a previous resource). The charging or discharging is continued by charging or discharging a subsequent resource in place of the previous resource.

The server 700 remotely controls the control target to operate as the balancing power (winning bid product). The server 700 controls the power conversion circuit of the control target (for example, the charging/discharging device 102 or the PCS 210 shown in FIG. 2) based on the command. The charging power or the discharging power of the control target may be controlled continuously to follow target values based on the supply and demand status. Alternatively, the charging power or the discharging power of the control target may be adjusted by duty control in accordance with the command. The resource serving as the control target keeps the charging/discharging relay (for example, the charging/discharging relay 104 or 220 shown in FIG. 2) closed (connected) in the allocated period. When the allocated period ends, the charging/discharging relay is opened (cut off).

In S102, the server 700 determines whether the balancing period of the winning bid product has ended. Within the balancing period, the determination is "NO" in S102, and the process returns to S101. By the process in S101, the power balancing of the power system PG is performed by the balancing power (one or more selected resources) provided by the aggregator. When a balancing end time of the winning bid product has come (YES in S102), the series of processes shown in FIG. 9 is terminated.

In the example described above, the server 700 directly controls each resource. However, the present invention is not limited to this example, and the server 700 may control the resource via the server 600. The server 700 may transmit a command to the server 600, and the server 600 may remotely control the resource in accordance with the command from the server 700.

The aggregator uses the server 600 to secure the balancing power for eliminating imbalance in terms of the balancing of the power system PG. The server 600 generates a balancing power request in the event of imbalance in terms of the balancing of the power system PG. Then, the server 600 selects a resource (including a power storage device) to be operated as the balancing power from the resource group 500 in response to the balancing power request.

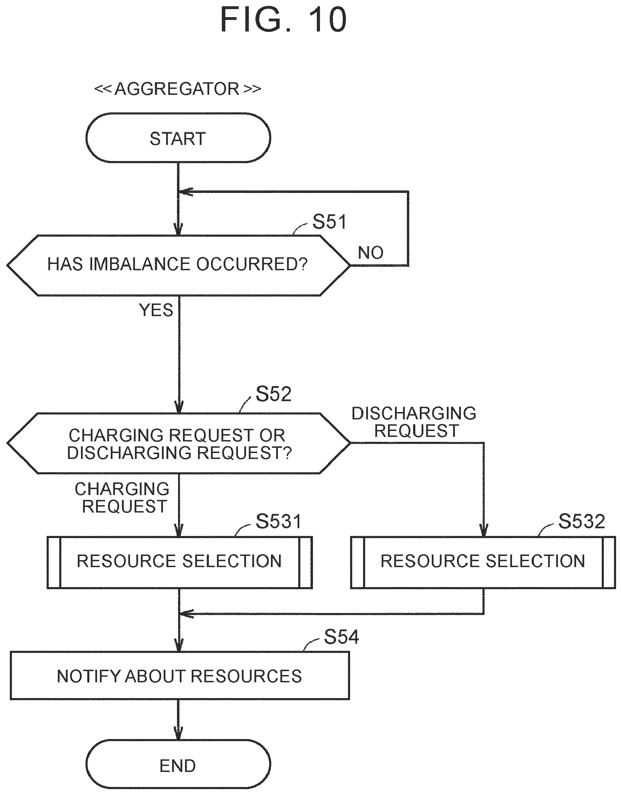

FIG. 10 is a flowchart showing a process related to securement of the balancing power for eliminating imbalance and executed by the server 600. The process shown in this flowchart is started, for example, when a planned value is input to the server 600.

Referring to FIGS. 1 to 3 and 10, the supply and demand management unit 613 monitors the balancing related to the power system PG in S51. Specifically, the supply and demand management unit 613 determines in S51 whether imbalance in terms of the balancing of the power system PG (difference between the planned value and actual supply and demand) is within a predetermined permissible range. When the imbalance is beyond the permissible range (YES in S51), the process proceeds to S52. When the determination is "YES" in S51, the imbalance in terms of the balancing of the power system PG has occurred. When the occurring imbalance is imbalance of insufficient demand, the supply and demand management unit 613 generates a charging request to eliminate the imbalance. When the occurring imbalance is imbalance of insufficient supply, the supply and demand management unit 613 generates a discharging request to eliminate the imbalance.

In S52, the supply and demand management unit 613 determines which of the charging request and the discharging request has been generated. When determination is made in S52 that the "charging request" has been generated, the process proceeds to S531. When determination is made in S52 that the "discharging request" has been generated, the process proceeds to S532. After the execution of the process in S531 or S532, the process proceeds to S54. In S531, S532, and S54, the processes according to S261, S262, and S27 in FIG. 6 are executed, respectively. That is, in S531, the process shown in FIG. 7 is executed. Since the balancing period for the imbalance is 30 minutes (one frame), the determination is "NO" in S31 of FIG. 7. In S532, the process shown in FIG. 8 is executed. Since the balancing period for the imbalance is 30 minutes (one frame), the determination is "NO" in S41 of FIG. 8. Thus, the charging request and the discharging request for eliminating the imbalance are regarded as the first charging request and the first discharging request, respectively. The series of processes shown in FIG. 10 is terminated after the execution of the process in S54.

The server 600 uses the balancing power secured as described above to eliminate the imbalance. The server 600 executes, for example, a process according to the process shown in FIG. 9 subsequently to the process shown in FIG. 10. As a result, the resources selected by the process of S531 or S532 in FIG. 10 are remotely controlled by the server 600. Specifically, during the balancing period for the imbalance, the resource management unit 611 generates a command (charging command or discharging command) to eliminate the imbalance based on the actual supply and demand of the power system PG, and transmits the generated command to the control target. The resource management unit 611 remotely controls the resources to operate as the balancing power for eliminating the imbalance. The actual supply and demand of the power system PG during the balancing period are monitored by the supply and demand management unit 613.

In the example described above, the server 600 directly controls each resource. However, the present invention is not limited to this example. In a configuration in which the server 600 belongs to a child aggregator (resource aggregator), the server 600 may control the resources in accordance with a command from a parent aggregator (aggregation coordinator). The server 600 may generate the charging request or the discharging request in response to a request from the parent aggregator.

Hereinafter, resource selection in response to the charging request in the power balancing method according to this embodiment will be described with reference to FIGS. 11 and 12. Hereinafter, the power balancing method according to this embodiment (hereinafter referred to also as "method according to Example") will be described in comparison with Comparative Examples 1 and 2. In a method according to Comparative Example 1, resources having shorter chargeable periods are sequentially selected regardless of the balancing period of the charging request. In a method according to Comparative Example 2, resources having longer chargeable periods are sequentially selected regardless of the balancing period of the charging request. In the method according to Example, the selection method is changed depending on the balancing period of the charging request (see S31 to S33 in FIG. 7).

FIG. 11 is a diagram showing results of resource selection by the methods according to Comparative Example 1, Comparative Example 2, and Example in a first case. In the first case, resources V1 to V5 shown in a table T1 in FIG. 11 are selection candidate resources, and two charging requests Rq11 and Rq12 are generated on the same day. The chargeable periods of the resources V1, V2, V3, V4, and V5 are 15 minutes, 30 minutes, 45 minutes, 1 hour, and 2 hours, respectively. The balancing period of the charging request Rq11 is 30 minutes (one frame), and the balancing period of the charging request Rq12 is 3 hours (six frames). It is assumed that the resources V1 to V5 do not charge or discharge their power storage devices in a period other than the balancing period of each charging request.

Referring to FIG. 11, in the method according to Comparative Example 1, the priority levels of resource selection are higher in the order of the resources V1, V2, V3, V4, and V5. Therefore, the resources V1 and V2 are allocated in this order for the balancing period of the charging request Rq11. The resource V2 is charged for 15 minutes during the balancing period of the charging request Rq11, and the chargeable period becomes 15 minutes. Then, the resources V2, V3, V4, and V5 are allocated in this order for the balancing period of the charging request Rq12.

In the method according to Comparative Example 2, the priority levels of resource selection are higher in the order of the resources V5, V4, V3, V2, and V1. Therefore, only the resource V5 is allocated for the balancing period of the charging request Rq11. The resource V5 is charged for 30 minutes during the balancing period of the charging request Rq11, and the chargeable period becomes 1 hour and 30 minutes. Then, the resources V5, V4, and V3 are allocated in this order for the balancing period of the charging request Rq12.

In the method according to Example, a resource having a short chargeable period is selected with priority in the resource selection in response to the first charging request, and a resource having a long chargeable period is selected with priority in the resource selection in response to the second charging request. The charging request Rq11 corresponds to the first charging request, and the charging request Rq12 corresponds to the second charging request. Therefore, the resources V1 and V2 are allocated in this order for the balancing period of the charging request Rq11. The resource V2 is charged for 15 minutes during the balancing period of the charging request Rq11, and the chargeable period becomes 15 minutes. Then, the resources V5 and V4 are allocated in this order for the balancing period of the charging request Rq12.

FIG. 12 is a diagram showing results of resource selection by the methods according to Comparative Example 1, Comparative Example 2, and Example in a second case. In the second case, resources V1 to V5 shown in a table T1 in FIG. 12 (same as the table T1 in FIG. 11) are selection candidate resources, and four charging requests Rq21 to Rq24 are generated on the same day. The balancing period of each of the charging requests Rq21 to Rq23 is 30 minutes (one frame), and the balancing period of the charging request Rq24 is 3 hours (six frames). It is assumed that the resources V1 to V5 do not charge or discharge their power storage devices in a period other than the balancing period of each charging request.

Referring to FIG. 12, in the method according to Comparative Example 1, the resources V1 and V2 are allocated in this order for the balancing period of the charging request Rq21. The resource V2 is charged for 15 minutes during the balancing period of the charging request Rq21, and the chargeable period becomes 15 minutes. Then, the resources V2 and V3 are allocated in this order for the balancing period of the charging request Rq22. The resource V3 is charged for 15 minutes during the balancing period of the charging request Rq22, and the chargeable period becomes 30 minutes. Only the resource V3 is allocated for the balancing period of the subsequent charging request Rq23. Then, the resources V4 and V5 are allocated in this order for the balancing period of the charging request Rq24.

In the method according to Comparative Example 2, only the resource V5 is allocated for the balancing periods of the charging requests Rq21 to Rq23. The resource V5 is charged for a total of 1 hour and 30 minutes during the balancing periods of the charging requests Rq21 to Rq23, and the chargeable period becomes 30 minutes. Therefore, the priority levels of resource selection for the charging request Rq24 are higher in the order of the resources V4, V3, V5, V2, and V1 (V5 and V2 may be reversed). The resources V4, V3, V5, V2, and V1 are allocated in this order for the balancing period of the charging request Rq24.

In the method according to Example, a resource having a short chargeable period is selected with priority in the resource selection in response to the first charging request, and a resource having a long chargeable period is selected with priority in the resource selection in response to the second charging request. Each of the charging requests Rq21 to Rq23 corresponds to the first charging request, and the charging request Rq24 corresponds to the second charging request. The resources V1 and V2 are allocated in this order for the balancing period of the charging request Rq21. The resource V2 is charged for 15 minutes during the balancing period of the charging request Rq21, and the chargeable period becomes 15 minutes. Then, the resources V2 and V3 are allocated in this order for the balancing period of the charging request Rq22. The resource V3 is charged for 15 minutes during the balancing period of the charging request Rq22, and the chargeable period becomes 30 minutes. Then, only the resource V3 is allocated for the balancing period of the charging request Rq23. Then, the resources V5 and V4 are allocated in this order for the balancing period of the charging request Rq24.

When the number of times of resource switching (specifically, resource switching midway along the balancing period) is compared among the methods according to Comparative Example 1, Comparative Example 2, and Example shown in FIGS. 11 and 12, the number of times of resource switching is smallest in the method according to Example. Specifically, the number of times of resource switching in the method according to Comparative Example 1 is four in the first case and three in the second case. The number of times of resource switching in the method according to Comparative Example 2 is two in the first case and four in the second case. The number of times of resource switching in the method according to Example is two in the first case and three in the second case. Thus, with the method according to Example, it is possible to select the resources that operate as the balancing power for the power system PG (external power supply) to reduce the number of times of resource switching.

Hereinafter, resource selection in response to the discharging request in the power balancing method according to this embodiment will be described with reference to FIGS. 13 and 14. Hereinafter, the method according to Example will be described in comparison with Comparative Examples 3 and 4. In a method according to Comparative Example 3, resources having shorter dischargeable periods are sequentially selected regardless of the balancing period of the discharging request. In a method according to Comparative Example 4, resources having longer dischargeable periods are sequentially selected regardless of the balancing period of the discharging request. In the method according to Example, the selection method is changed depending on the balancing period of the discharging request (see S41 to S43 in FIG. 8).

FIG. 13 is a diagram showing results of resource selection by the methods according to Comparative Example 3, Comparative Example 4, and Example in a third case. In the third case, resources V1 to V5 shown in a table T1 in FIG. 13 (same as the table T1 in FIG. 11) are selection candidate resources, and two discharging requests Rq31 and Rq32 are generated on the same day. The dischargeable periods of the resources V1, V2, V3, V4, and V5 are 2 hours, 1 hour, 45 minutes, 30 minutes, and 15 minutes, respectively. The balancing period of the discharging request Rq31 is 30 minutes (one frame), and the balancing period of the discharging request Rq32 is 3 hours (six frames). It is assumed that the resources V1 to V5 do not charge or discharge their power storage devices in a period other than the balancing period of each discharging request.

Referring to FIG. 13, in the method according to Comparative Example 3, the resources V5 and V4 are allocated in this order for the balancing period of the discharging request Rq31, and the resources V4, V3, V2, and V1 are allocated in this order for the balancing period of the discharging request Rq32. In the method according to Comparative Example 4, only the resource V1 is allocated for the balancing period of the discharging request Rq31, and the resources V1, V2, and V3 are allocated in this order for the balancing period of the discharging request Rq32.

In the method according to Example, a resource having a short dischargeable period is selected with priority in the resource selection in response to the first discharging request, and a resource having a long dischargeable period is selected with priority in the resource selection in response to the second discharging request. The discharging request Rq31 corresponds to the first discharging request, and the discharging request Rq32 corresponds to the second discharging request. Therefore, the resources V5 and V4 are allocated in this order for the balancing period of the discharging request Rq31, and the resources V1 and V2 are allocated in this order for the balancing period of the discharging request Rq32.

FIG. 14 is a diagram showing results of resource selection by the methods according to Comparative Example 3, Comparative Example 4, and Example in a fourth case. In the fourth case, resources V1 to V5 shown in a table T1 in FIG. 14 (same as the table T1 in FIG. 11) are selection candidate resources, and four discharging requests Rq41 to Rq44 are generated on the same day. The balancing period of each of the discharging requests Rq41 to Rq43 is 30 minutes (one frame), and the balancing period of the discharging request Rq44 is 3 hours (six frames). It is assumed that the resources V1 to V5 do not charge or discharge their power storage devices in a period other than the balancing period of each discharging request.

Referring to FIG. 14, in the method according to Comparative Example 3, the resources V5 and V4 are allocated in this order for the balancing period of the discharging request Rq41, the resources V4 and V3 are allocated in this order for the balancing period of the discharging request Rq42, only the resource V3 is allocated for the balancing period of the discharging request Rq43, and the resources V2 and V1 are allocated in this order for the balancing period of the discharging request Rq44.

In the method according to Comparative Example 4, only the resource V1 is allocated for the balancing periods of the discharging requests Rq41 to Rq43, and the resources V2, V3, V1, V4, and V5 are allocated in this order for the balancing period of the discharging request Rq44.

In the method according to Example, a resource having a short dischargeable period is selected with priority in the resource selection in response to the first discharging request, and a resource having a long dischargeable period is selected with priority in the resource selection in response to the second discharging request. Each of the discharging requests Rq41 to Rq43 corresponds to the first discharging request, and the discharging request Rq44 corresponds to the second discharging request. The resources V5 and V4 are allocated in this order for the balancing period of the discharging request Rq41, the resources V4 and V3 are allocated in this order for the balancing period of the discharging request Rq42, only the resource V3 is allocated for the balancing period of the discharging request Rq43, and the resources V1 and V2 are allocated in this order for the balancing period of the discharging request Rq44.

When the number of times of resource switching (specifically, resource switching midway along the balancing period) is compared among the methods according to Comparative Example 3, Comparative Example 4, and Example shown in FIGS. 13 and 14, the number of times of resource switching is smallest in the method according to Example. Specifically, the number of times of resource switching in the method according to Comparative Example 3 is four in the third case and three in the fourth case. The number of times of resource switching in the method according to Comparative Example 4 is two in the third case and four in the fourth case. The number of times of resource switching in the method according to Example is two in the third case and three in the fourth case. Thus, with the method according to Example, it is possible to select the resources that operate as the balancing power for the power system PG (external power supply) to reduce the number of times of resource switching.

As described above, the power balancing method according to this embodiment includes the processes shown in FIGS. 4 and 6 to 10.

In the process shown in FIG. 7, the server 600 determines the chargeable periods of the resources that can operate as the balancing power for the power system PG (external power supply) in S30A. In S31, the server 600 determines whether the charging request for the balancing power is the first charging request or the second charging request. When determination is made that the charging request is the first charging request (NO in S31), the server 600 selects, in S32, a resource having a short chargeable period with priority in the resource selection in response to the charging request. When determination is made that the charging request is the second charging request (YES in S31), the server 600 selects, in S33, a resource having a long chargeable period with priority in the resource selection in response to the charging request.

In the process shown in FIG. 8, the server 600 determines the dischargeable periods of the resources that can operate as the balancing power for the power system PG (external power supply) in S40A. In S41, the server 600 determines whether the discharging request for the balancing power is the first discharging request or the second discharging request. When determination is made that the discharging request is the first discharging request (NO in S41), the server 600 selects, in S42, a resource having a short dischargeable period with priority in the resource selection in response to the discharging request. When determination is made that the discharging request is the second discharging request (YES in S41), the server 600 selects, in S43, a resource having a long dischargeable period with priority in the resource selection in response to the discharging request.

In the process shown in FIG. 9, the server 600 or 700 causes the resources selected in the resource selection in response to each of the charging request and the discharging request to operate as the balancing power for the power system PG (external power supply).

According to the power balancing method described above, it is possible to select the resources that operate as the balancing power for the power system PG to reduce the number of times of resource switching. According to the method described above, it is possible to appropriately balance the electric power in the power system PG by the selected resources.

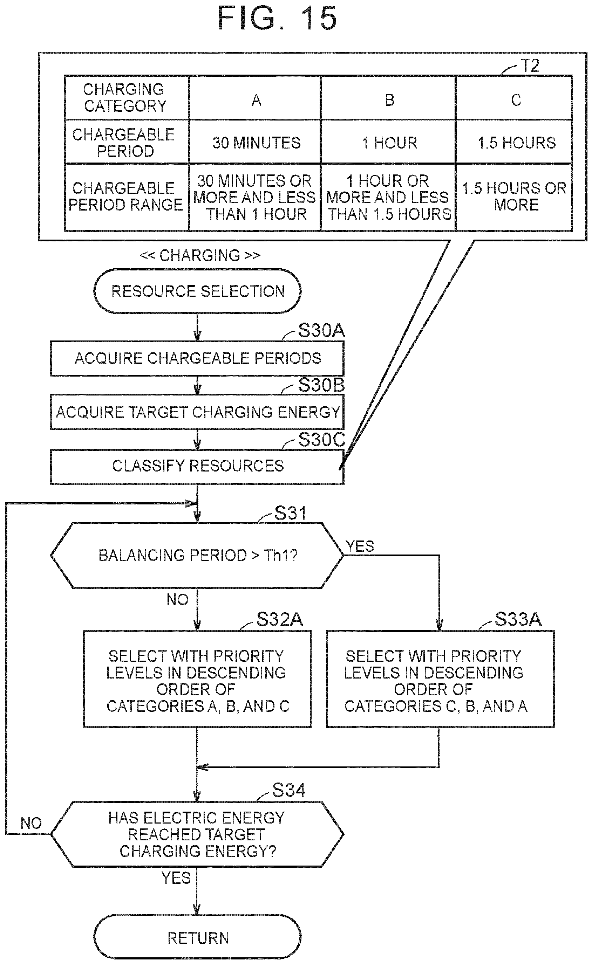

The server 600 may classify the resources into a plurality of categories in which different chargeable period ranges are set. The server 600 may classify the resources in the resource group 500 into categories corresponding to the chargeable periods of the respective resources, and regard a plurality of resources belonging to the same category as resources having the same chargeable period. For example, the server 600 may execute a process shown in FIG. 15 in place of the process shown in FIG. 7. FIG. 15 is a flowchart showing a modification of the process shown in FIG. 7.

The process shown in FIG. 15 is the same as the process shown in FIG. 7 except that S30C is added to the process shown in FIG. 7 and S32A and S33A are adopted in place of S32 and S33 (FIG. 7), respectively. Hereinafter, S30C, S32A, and S33A will mainly be described.

Referring to FIGS. 1 to 3 and 15, after the process in S30B, the selection unit 612 classifies, in S30C, each selection candidate resource into any one of categories A to C shown in a table T2 in FIG. 15. In the categories A, B, and C, chargeable period ranges "30 minutes or more and less than 1 hour", "1 hour or more and less than 1 hour and 30 minutes", and"1 hour and 30 minutes or more" are set, respectively. Each selection candidate resource is classified into a category corresponding to the chargeable period of the resource. For example, a resource having a chargeable period of 30 minutes is classified into the category A. A resource having a chargeable period of 2 hours is classified into the category C. The resources belonging to the same category are regarded as resources having the same chargeable period. For example, the resources classified into the category A are regarded as resources having a chargeable period of 30 minutes, and the resources belonging to the category A are not charged for more than 30 minutes. The period of 30 minutes corresponds to a lower limit of the chargeable period range set in the category A. Similarly, the resources classified into the categories B and C are regarded as resources having a chargeable period of 1 hour and a chargeable period of 1 hour and 30 minutes, respectively. Resources having chargeable periods of less than 30 minutes are excluded from the selection candidates because they do not correspond to any of the categories A to C. In this modification, the width of the category is set to 30 minutes in conformity with the length of the frame related to the electricity market and the imbalance. In this modification, the number of categories is three, but may be changed as appropriate.

When the resource classification in S30C is completed, the process proceeds to S31. When the length of the balancing period is equal to or smaller than Th1 (NO in S31), the selection unit 612 selects a resource from among the selection candidates in S32A with the priority levels in descending order of the categories A, B, and C. That is, a resource having a short chargeable period is selected with priority. When the balancing period is longer than Th1 (YES in S31), the selection unit 612 selects a resource from among the selection candidates in S33A with the priority levels in descending order of the categories C, B, and A. That is, a resource having a long chargeable period is selected with priority.

By the process in S32A or S33A, the selection unit 612 selects the resource so that the total of electric energy balanced by the selected resources approaches the target charging energy (S30B). Whether the total of electric energy has reached the target charging energy is determined in S34. When the determination is "YES" in S34, the series of processes shown in FIG. 15 is terminated.

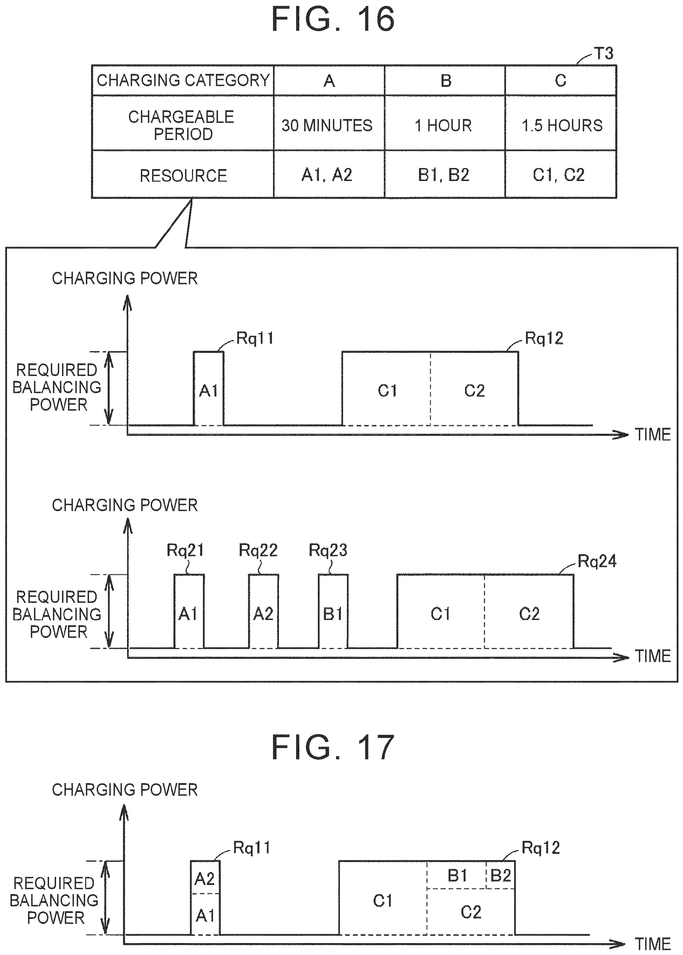

Hereinafter, resource selection in response to the charging request in the power balancing method according to the modification will be described with reference to FIG. 16.

FIG. 16 is a diagram showing results of resource selection in response to the charging request by the method according to the modification shown in FIG. 15 in fifth and sixth cases. The fifth and sixth cases are basically the same as the first and second cases described above, respectively. The selection candidate resources are six resources shown in a table T3 in FIG. 16. Resources A1 and A2 belong to a category A, resources B1 and B2 belong to a category B, and resources C1 and C2 belong to a category C. The categories A to C shown in the table T3 in FIG. 16 are the same as the categories A to C shown in the table T2 in FIG. 15. Charging requests Rq11, Rq12, and Rq21 to Rq24 in FIG. 16 are the same as the charging requests Rq11, Rq12, and Rq21 to Rq24 in FIGS. 11 and 12.

Referring to FIG. 16, in the method according to the modification (see FIG. 15), the resources are selected with the priority levels in descending order of the categories A, B, and C in the resource selection in response to the first charging request, and the resources are selected with the priority levels in descending order of the categories C, B, and A in the resource selection in response to the second charging request.

In the fifth case, the charging request Rq11 corresponds to the first charging request, and the charging request Rq12 corresponds to the second charging request. Therefore, only the resource A1 is allocated for the balancing period of the charging request Rq11. Then, the resources C1 and C2 are allocated for the balancing period of the charging request Rq12.

In the sixth case, each of the charging requests Rq21 to Rq23 corresponds to the first charging request, and the charging request Rq24 corresponds to the second charging request. Therefore, only the resource A1 is allocated for the balancing period of the charging request Rq21, only the resource A2 is allocated for the balancing period of the charging request Rq22, and only the resource B1 is allocated for the balancing period of the charging request Rq23. Then, the resources C1 and C2 are allocated for the balancing period of the charging request Rq24.

The number of times of resource switching (specifically, resource switching midway along the balancing period) in the method according to the modification is one in both the fifth case and the sixth case. Thus, with the method according to the modification, it is easier to reduce the number of times of resource switching.

When a single resource cannot cover the required balancing power (charging power), the server 600 may secure the required balancing power (charging power) by allocating a plurality of resources for the same period and causing the resources to perform charging simultaneously. FIG. 17 is a diagram showing an example of simultaneous charging of a plurality of resources in the same period. Resources A1, A2, B1, B2, C1, and C2 in FIG. 17 are basically the same as those shown in the table T3 in FIG. 16. It is assumed that the maximum charging power of the resource C2 is not sufficient for the required balancing power.

Referring to FIG. 17, in this example, the required balancing power (target charging power) is secured by simultaneously charging the resources A1 and A2 during the balancing period of the charging request Rq11. In the second half of the balancing period of the charging request Rq12, the resources B1 and B2 are sequentially charged while continuing to charge the resource C2. When the resource B1 or B2 is charged together with the resource C2, the required balancing power (target charging power) is secured. The chargeable period of the resource may be calculated by using the balancing power allocated to the resource in the required balancing power (target charging power).

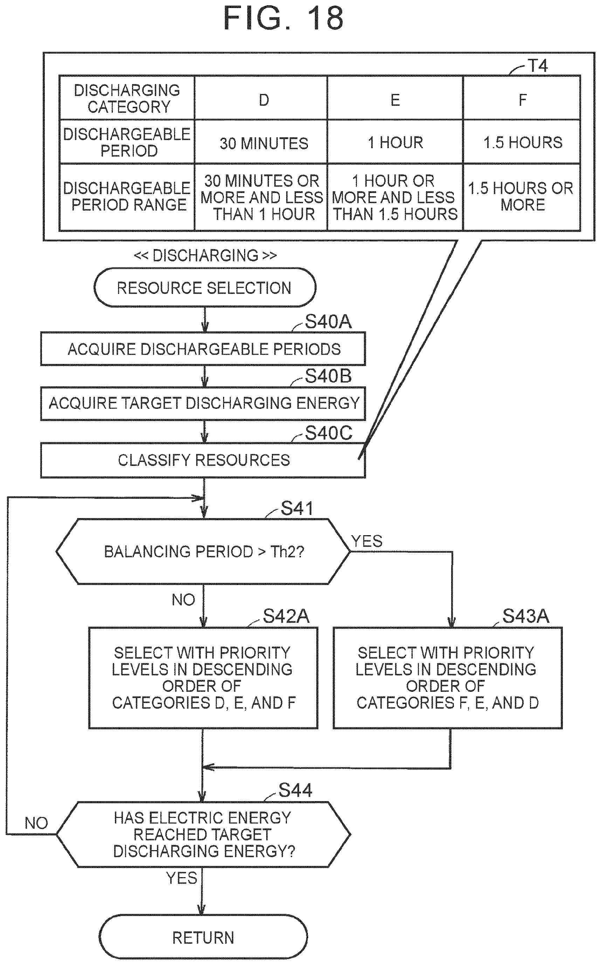

The server 600 may execute a process shown in FIG. 18 in place of the process shown in FIG. 8. FIG. 18 is a flowchart showing a modification of the process shown in FIG. 8.

The process shown in FIG. 18 is the same as the process shown in FIG. 8 except that S40C is added to the process shown in FIG. 8 and S42A and S43A are adopted in place of S42 and S43 (FIG. 8), respectively. Hereinafter, S40C, S42A, and S43A will mainly be described.

Referring to FIGS. 1 to 3 and 18, after the process in S40B, the selection unit 612 classifies, in S40C, each selection candidate resource into any one of categories D to F shown in a table T4 in FIG. 18. In the categories D, E, and F, dischargeable period ranges "30 minutes or more and less than 1 hour", "1 hour or more and less than 1 hour and 30 minutes", and"1 hour and 30 minutes or more" are set, respectively. Each selection candidate resource is classified into a category corresponding to the dischargeable period of the resource. The resources belonging to the same category are regarded as resources having the same dischargeable period. The resources classified into the categories D, E, and F are regarded as resources having a dischargeable period of 30 minutes, a dischargeable period of 1 hour, and a dischargeable period of 1 hour and 30 minutes, respectively. Resources having dischargeable periods of less than 30 minutes are excluded from the selection candidates because they do not correspond to any of the categories D to F. In this modification, the width of the category is set to 30 minutes in conformity with the length of the frame related to the electricity market and the imbalance. In this modification, the number of categories is three, but may be changed as appropriate.

When the resource classification in S40C is completed, the process proceeds to S41. When the length of the balancing period is equal to or smaller than Th2 (NO in S41), the selection unit 612 selects a resource from among the selection candidates in S42A with the priority levels in descending order of the categories D, E, and F. That is, a resource having a short dischargeable period is selected with priority. When the balancing period is longer than Th2 (YES in S41), the selection unit 612 selects a resource from among the selection candidates in S43A with the priority levels in descending order of the categories F, E, and D. That is, a resource having a long dischargeable period is selected with priority.

By the process in S42A or S43A, the selection unit 612 selects the resource so that the total of electric energy balanced by the selected resources approaches the target discharging energy (S40B). Whether the total of electric energy has reached the target discharging energy is determined in S44. When the determination is "YES" in S44, the series of processes shown in FIG. 18 is terminated.

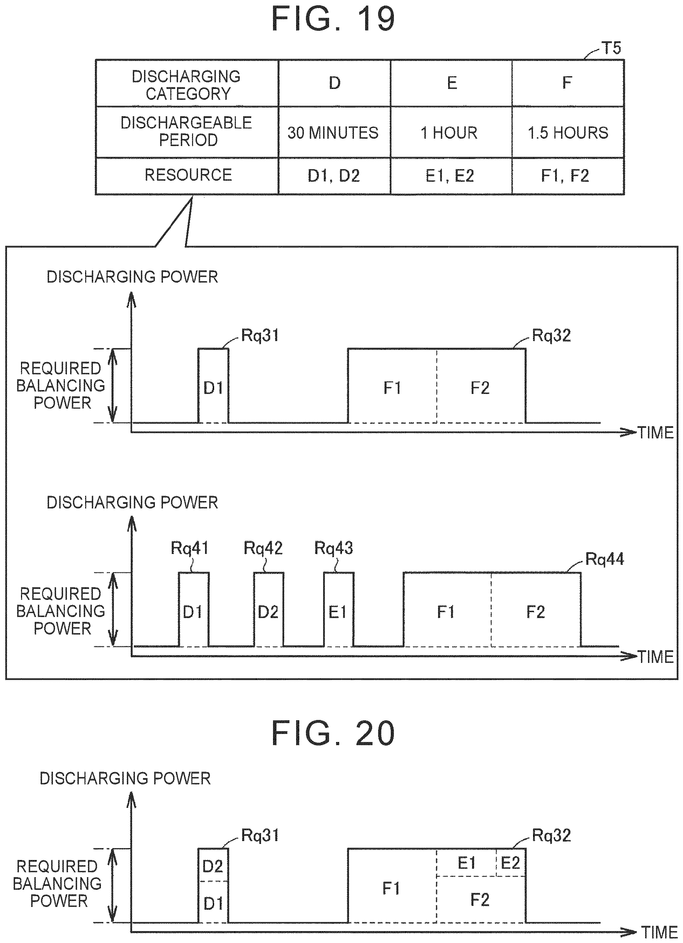

Hereinafter, resource selection in response to the discharging request in the power balancing method according to the modification will be described with reference to FIG. 19.

FIG. 19 is a diagram showing results of resource selection in response to the discharging request by the method according to the modification shown in FIG. 18 in seventh and eighth cases. The seventh and eighth cases are basically the same as the third and fourth cases described above, respectively. The selection candidate resources are six resources shown in a table T5 in FIG. 19. Resources D1 and D2 belong to a category D, resources E1 and E2 belong to a category E, and resources F1 and F2 belong to a category F. The categories D to F shown in the table T5 in FIG. 19 are the same as the categories D to F shown in the table T4 in FIG. 18. Discharging requests Rq31, Rq32, and Rq41 to Rq44 in FIG. 19 are the same as the discharging requests Rq31, Rq32, and Rq41 to Rq44 in FIGS. 13 and 14.

Referring to FIG. 19, in the method according to the modification (see FIG. 18), the resources are selected with the priority levels in descending order of the categories D, E, and F in the resource selection in response to the first discharging request, and the resources are selected with the priority levels in descending order of the categories F, E, and D in the resource selection in response to the second discharging request.

In the seventh case, the discharging request Rq31 corresponds to the first discharging request, and the discharging request Rq32 corresponds to the second discharging request. Therefore, only the resource D1 is allocated for the balancing period of the discharging request Rq31. Then, the resources F1 and F2 are allocated for the balancing period of the discharging request Rq32.

In the eighth case, each of the discharging requests Rq41 to Rq43 corresponds to the first discharging request, and the discharging request Rq44 corresponds to the second discharging request. Therefore, only the resource D1 is allocated for the balancing period of the discharging request Rq41, only the resource D2 is allocated for the balancing period of the discharging request Rq42, and only the resource E1 is allocated for the balancing period of the discharging request Rq43. Then, the resources F1 and F2 are allocated for the balancing period of the discharging request Rq44.

The number of times of resource switching (specifically, resource switching midway along the balancing period) in the method according to the modification is one in both the seventh case and the eighth case. Thus, with the method according to the modification, it is easier to reduce the number of times of resource switching.

When a single resource cannot cover the required balancing power (discharging power), the server 600 may secure the required balancing power (discharging power) by allocating a plurality of resources for the same period and causing the resources to perform discharging simultaneously. FIG. 20 is a diagram showing an example of simultaneous discharging of a plurality of resources in the same period. Resources D1, D2, E1, E2, F1, and F2 in FIG. 20 are basically the same as those shown in the table T5 in FIG. 19. It is assumed that the maximum discharging power of the resource F2 is not sufficient for the required balancing power.

Referring to FIG. 20, in this example, the required balancing power (target discharging power) is secured by simultaneously discharging the resources D1 and D2 during the balancing period of the discharging request Rq31. In the second half of the balancing period of the discharging request Rq32, the resources E1 and E2 are sequentially discharged while continuing to discharge the resource F2. When the resource E1 or E2 is discharged together with the resource F2, the required balancing power (target discharging power) is secured. The dischargeable period of the resource may be calculated by using the balancing power allocated to the resource in the required balancing power (target discharging power).

In the embodiment and each modification described above, it is not essential that the power balancing by the resource is executed by the remote control. The selected resource may execute the power balancing by local control based on a command received from the server in advance. The server 600 may monitor the presence or absence of an abnormality in the selected resource during the balancing period of the winning bid product, and notify the server 700 about a normal alternative resource when an abnormality occurs in the resource.

The configuration of the power management system is not limited to the configuration shown in FIG. 1. Another server may be provided between the server 700 and the server 600. The server 600 may communicate with the server 700 via the other server. Another server may be provided between the resource group 500 and the server 600. The server 600 may communicate with the resource group 500 via the other server. In the embodiment described above, the on-premises server (server 600) causes the resource to perform the power balancing by charging or discharging. However, the present invention is not limited to this case, and the functions of the server 600 (in particular, the functions related to the resource management) may be implemented on a cloud by cloud computing. The functions of the server 600 may also be implemented in a mobile terminal.

In the embodiment described above, the resource group 500 (management target) includes the xEV 100 and the ESS 200. The server 600 can use the ESS 200 connected always to the power system PG as the balancing power for the power system PG. The server 600 can use the xEV 100 (vehicle) electrically connected to the power system PG via the EVSE 310 (charging equipment) as the balancing power for the power system PG. However, the present invention is not limited to this case, and the resource group 500 may include only one of the xEV 100 and the ESS 200. For example, the server 600 may manage only the vehicle as a resource.

The power system PG is not limited to the large-scale alternating current grid provided by the electric power company, and may be a microgrid or a direct current (DC) grid. The configuration of the xEV is not limited to the configuration described above (see FIG. 2). The xEV may include a charger or a discharger in place of the charging/discharging device. The server 600 may execute only one of the process shown in FIG. 7 and the process shown in FIG. 8. The resources may be xEVs other than the BEV and the PHEV (FCEV, range extender EV, etc.).

The xEV may include a solar panel. The xEV may be chargeable wirelessly. The xEV may be capable of autonomous driving or may have a flying function. The xEV is not limited to a passenger car, and may be a bus or a truck. The xEV may be a vehicle capable of unmanned driving (for example, a robotaxi, an automated guided vehicle (AGV), or an agricultural machine). The xEV may be an unmanned or single-seater small-sized BEV (for example, a micropallet). The resource may be a moving object other than the xEV (railroad vehicle, ship, airplane, drone, walking robot, robot cleaner, etc.).

The embodiment disclosed herein should be considered as illustrative and not restrictive in all respects. The scope of the present invention is shown by the claims rather than by the above description of the embodiment and is intended to include all modifications within the meaning and scope equivalent to those of the claims.

A computer (600) manages a plurality of resources (500) operable as a balancing power for an external power supply (PG). Each of the resources (500) includes a power storage device (B2) chargeable with electric power from the external power supply (PG). The computer (600) executes resource selection for selecting a resource to be operated as the balancing power from among the resources (500) in response to a charging request for the balancing power. The computer (600) determines chargeable periods of the resources (500) prior to the resource selection. The computer (600) selects a resource having a short chargeable period with priority in the resource selection in response to a first charging request, and selects a resource having a long chargeable period with priority in the resource selection in response to a second charging request. A balancing period requested in the second charging request is longer than a balancing period requested in the first charging request.

## Claims

1. A computer (600) configured to manage a plurality of resources (500) operable as a balancing power for an external power supply (PG), **characterized by** that:
each of the resources (500) includes a power storage device (B2) chargeable with electric power from the external power supply (PG);
the computer (600) is configured to execute resource selection for selecting a resource to be operated as the balancing power from among the resources (500) in response to a charging request for the balancing power;
the computer (600) is configured to determine chargeable periods of the resources (500) prior to the resource selection;
the computer (600) is configured to select a resource having a short chargeable period with priority in the resource selection in response to a first charging request;
the computer is configured to select a resource having a long chargeable period with priority in the resource selection in response to a second charging request; and
a balancing period requested in the second charging request is longer than a balancing period requested in the first charging request.

2. The computer (600) according to claim 1, **characterized by** that:
the computer (600) is configured to trade the balancing power in an electricity market (1) and generate the charging request when a bid is won in the electricity market (1) for the balancing power for increase in demand;
the balancing power is traded in units of frames in the electricity market (1);
the computer (600) is configured to regard a charging request for the balancing power in a predetermined number of frames or less as the first charging request; and
the computer (600) is configured to regard a charging request for the balancing power in more than the predetermined number of frames as the second charging request.

3. The computer (600) according to claim 1 to 2, **characterized by** that:
the computer (600) is configured to generate the charging request when imbalance of insufficient demand has occurred in terms of balancing of the external power supply (PG); and
the computer (600) is configured to regard a charging request for eliminating the imbalance as the first charging request.

4. The computer (600) according to claim 1 to 3, **characterized by** that:
the computer (600) is configured to classify each of the resources (500) into a category corresponding to the chargeable period of the resource among a plurality of categories in which different chargeable period ranges are set; and
the computer is configured to regard the resources belonging to the same category as resources having the same chargeable period.

5. The computer (600) according to claim 1 to 4, **characterized by** that the computer (600) is configured to calculate the chargeable period of each of the resources (500) by using an SOC of the power storage device of each of the resources (500) and rated charging power of the power storage device (B2).

6. The computer (600) according to claim 1 to 5, **characterized by** that the resources (500) include a vehicle (100) electrically connectable to the external power supply via charging equipment.

7. The computer (600) according to claim 1 to 6, **characterized by** that the computer (600) is configured to remotely control the resource selected by the resource selection to operate as the balancing power.

8. The computer (600) according to claim 1 to 7, **characterized by** that:
the computer (600) is configured to determine target electric energy for the charging request; and
the computer (600) is configured to select the resource in the resource selection to cause a total of electric energy balanced by the selected resource to reach the target electric energy.

9. A computer (600) configured to manage a plurality of resources (500) operable as a balancing power for an external power supply (PG), **characterized by** that:
each of the resources (500) includes a power storage device (B2) configured to discharge electric power to the external power supply (PG);
the computer (600) is configured to execute resource selection for selecting a resource to be operated as the balancing power from among the resources (500) in response to a discharging request for the balancing power;
the computer (600) is configured to determine dischargeable periods of the resources (500) prior to the resource selection;
the computer (600) is configured to select a resource having a short dischargeable period with priority in the resource selection in response to a first discharging request;
the computer (600) is configured to select a resource having a long dischargeable period with priority in the resource selection in response to a second discharging request; and
a balancing period requested in the second discharging request is longer than a balancing period requested in the first discharging request.

10. A power balancing method **characterized by** comprising:
determining chargeable periods of a plurality of resources operable as a balancing power for an external power supply (PG);
determining whether a charging request for the balancing power is a first charging request or a second charging request for power balancing in a balancing period longer than a balancing period of the first charging request;
selecting a resource having a short chargeable period with priority in resource selection in response to the charging request when determination is made that the charging request is the first charging request;
selecting a resource having a long chargeable period with priority in resource selection in response to the charging request when determination is made that the charging request is the second charging request; and
causing the resource selected in the resource selection in response to the charging request to operate as the balancing power for the external power supply (PG).

11. A power balancing method **characterized by** comprising:
determining dischargeable periods of a plurality of resources (500) operable as a balancing power for an external power supply (PG);
determining whether a discharging request for the balancing power is a first discharging request or a second discharging request for power balancing in a balancing period longer than a balancing period of the first discharging request;
selecting a resource having a short dischargeable period with priority in resource selection in response to the discharging request when determination is made that the discharging request is the first charging request;
selecting a resource having a long dischargeable period with priority in resource selection in response to the discharging request when determination is made that the discharging request is the second discharging request; and
causing the resource selected in the resource selection in response to the discharging request to operate as the balancing power for the external power supply (PG).
